# EUROPEAN PATENT APPLICATION

(11) **EP 4 636 990 A1**
(43) Date of publication of application: **22.10.2025**
(21) Application number: 23903101.6
(22) Date of filing: 18.10.2023
(51) Int. Cl.: H02J 50/12, H02J 7/00, H02J 50/40

(54) **NON-CONTACT POWER FEEDING SYSTEM, POWER RECEIVING DEVICE, AND POWER TRANSMITTING DEVICE**

(30) Priority: 14.12.2022 JP 2022199166
(71) Applicant: DENSO CORPORATION, Kariya-city, Aichi 448-8661 (JP)
(72) Inventor: TAKAHASHI, Masaya, Kariya- city, Aichi 4488661 (JP); NAKAYASHIKI, Yusei, Kariya- city, Aichi 4488661 (JP); SHIBANUMA, Mitsuru, Kariya- city, Aichi 4488661 (JP); YAMADA, Hidetoshi, Kariya- city, Aichi 4488661 (JP); YAMAGUCHI, Nobuhisa, Kariya- city, Aichi 4488661 (JP)
(74) Representative: TBK
(86) International application number: PCT/JP2023/037733
(87) International publication number: WO 2024/127802

(57) **Abstract**

A wireless power transfer system (1) includes a power transmission device (10) and a power reception device (80) that is wirelessly supplied with power from the power transmission device. The power reception device includes: a secondary side resonance circuit (81); a magnetic flux generation circuit (86) including a magnetic flux generation coil (L2) configured to generate magnetic flux radiated toward a primary side coil, a pulse generation circuit (82) configured to supply AC power to the magnetic flux generation coil, and a secondary side control unit (85) configured to control the pulse generation circuit; and a secondary side detection circuit (M2) configured to detect at least one of a value of voltage supplied to the pulse generation circuit, a value of current flowing through the secondary side coil, and a magnitude of magnetic flux generated by the primary side coil. The power transmission device transitions from a standby state to a power transmission state in which a power transmission current is supplied to the primary side coil when the primary side detection circuit detects an increase in the magnetic flux linking with the primary side coil. The magnetic flux generation circuit adjusts the generated magnetic flux based on a detected value of the secondary side detection circuit.

## Description

### [Cross Reference to Related Application]

This application is based on and claims the benefit of priority from Japanese Patent Application No. 2022-199166 filed December 14, 2022, the contents of each of which are incorporated herein by reference.

### [Technical Field]

This disclosure relates to a wireless power transfer device, a power reception device, and a power transmission device.

### [Background Art]

Various technologies have been proposed for wireless power transfer from a power transmission side to a power reception side by electromagnetic induction (e.g., PTL 1). According to the technology of PTL 1, the charging device, which serves as the power transmission side, receives a measurement result of the magnetic field intensity transmitted from the device on the power reception side via bidirectional wireless communication, and subsequently starts power transmission after moving to an optimal position.

### [Citation List]

### [Patent Literature]

[PTL 1] JP 2010-88178 A

### [Summary of the Invention]

However, when the bidirectional wireless communication prior to power transmission takes time, the initiation of power transmission may be delayed.

The present disclosure may be implemented according to the following aspects.

A first aspect of the present disclosure provides a wireless power transfer system for wirelessly transferring power from a power transmission device to a power reception device. The power transmission device includes: a primary side resonance circuit including a primary side coil and a primary side capacitor; an AC power source configured to apply AC power of a predefined operating frequency to the primary side resonance circuit; and a primary side detection circuit configured to detect a magnitude of magnetic flux linking the primary side coil or a magnitude of magnetic flux in a vicinity of the primary side coil. The power reception device includes: a secondary side resonance circuit including a secondary side coil magnetically coupled to the primary side coil and a secondary side capacitor; a magnetic flux generation circuit including a magnetic flux generation coil configured to generate magnetic flux radiated toward the primary side coil in a standby state of the power transmission device, a pulse generation circuit configured to supply AC power to the magnetic flux generation coil, and a secondary side control unit configured to control the pulse generation circuit; and a secondary side detection circuit configured to detect at least one of a value of voltage supplied to the pulse generation circuit, a value of current flowing through the secondary side coil or the pulse generation circuit, and a magnitude of magnetic flux generated by the primary side coil. The power transmission device transitions from the standby state to a power transmission state in which a transmission current is supplied to the primary side coil when the primary side detection circuit detects an increase in the magnetic flux linking the primary side coil or an increase in the magnetic flux in the vicinity of the primary side coil. The magnetic flux generation circuit adjusts the generated magnetic flux based on a detected value of the secondary side detection circuit.

According to this aspect, the power transmission device transitions from the standby state to the power transmission state in response to the primary side detection circuit detecting an increase in magnetic flux, generated by the magnetic flux generation circuit, linking the primary side coil or in the vicinity of the primary side coil. Accordingly, the wireless power transfer system can initiate wireless power transfer at an early stage. Further, by adjusting the generated magnetic flux based on the detected value of the secondary side detection circuit, the magnetic flux generation circuit can appropriately control the magnitude of the magnetic flux generated by the magnetic flux generation coil.

A second aspect of the present disclosure provides a power reception device for receiving power wirelessly from a power transmission device. The power transmission device includes: a primary side resonance circuit including a primary side coil and a primary side capacitor; an AC power source configured to apply AC power of a predefined operating frequency to the primary side resonance circuit; and a primary side detection circuit configured to detect a magnitude of magnetic flux linking the primary side coil or a magnitude of magnetic flux in a vicinity of the primary side coil. The power reception device includes: a secondary side resonance circuit including a secondary side coil magnetically coupled to the primary side coil and a secondary side capacitor; a magnetic flux generation circuit including a magnetic flux generation coil configured to generate magnetic flux radiated toward the primary side coil in a standby state of the power transmission device, a pulse generation circuit configured to supply AC power to the magnetic flux generation coil, and a secondary side control unit configured to control the pulse generation circuit; and a secondary side detection circuit configured to detect at least one of a value of voltage supplied to the pulse generation circuit, a value of current flowing through the secondary side coil or the pulse generation circuit, and a magnitude of magnetic flux generated by the primary side coil. The power transmission device transitions from the standby state to a power transmission state in which a power transmission current is supplied to the primary side coil when the primary side detection circuit detects an increase in the magnetic flux linking the primary side coil or an increase in the magnetic flux in the vicinity of the primary side coil. The magnetic flux generation circuit adjusts the generated magnetic flux based on a detected value of the secondary side detection circuit.

According to this aspect, the power transmission device transitions from the standby state to the power transmission state in response to the primary side detection circuit detecting an increase in magnetic flux, generated by the magnetic flux generation circuit, linking the primary side coil or in the vicinity of the primary side coil. This allows the wireless power transfer system to initiate wireless power transfer at an early stage. Further, the magnetic flux generation circuit can appropriately control the magnitude of the magnetic flux generated by the magnetic flux generation coil by adjusting the generated magnetic flux based on the detected value of the secondary side detection circuit.

A second aspect of the present disclosure provides a power transmission device for wirelessly transferring power to a power reception device. The power transmission device includes: a primary side resonance circuit including a primary side coil and a primary side capacitor; an AC power source configured to apply AC power of a predefined operating frequency to the primary side resonance circuit; and a primary side detection circuit configured to detect a magnitude of magnetic flux linking the primary side coil or a magnitude of magnetic flux in a vicinity of the primary side coil. The power reception device includes: a secondary side resonance circuit including a secondary side coil magnetically coupled to the primary side coil and a secondary side capacitor; a magnetic flux generation circuit including a magnetic flux generation coil configured to generate magnetic flux radiated toward the primary side coil in a standby state of the power transmission device, a pulse generation circuit configured to supply AC power to the magnetic flux generation coil, and a secondary side control unit configured to control the pulse generation circuit; and a secondary side detection circuit configured to detect at least one of a value of voltage supplied to the pulse generation circuit, a value of current flowing through the secondary side coil or the pulse generation circuit, and a magnitude of magnetic flux generated by the primary side coil. The magnetic flux generation circuit adjusts the generated magnetic flux based on a detected value of the secondary side detection circuit. The power transmission device transitions from the standby state to a power transmission state in which a power transmission current is supplied to the primary side coil when the primary side detection circuit detects an increase in the magnetic flux linking the primary side coil or an increase in the magnetic flux in the vicinity of the primary side coil.

According to this aspect, the power transmission device transitions from the standby state to the power transmission state in response to the primary side detection circuit detecting an increase in magnetic flux, generated by the magnetic flux generation circuit, linking the primary side coil or in the vicinity of the primary side coil. This allows the wireless power transfer system to initiate wireless power transfer at an early stage. Further, the magnetic flux generation circuit can appropriately control the magnitude of the magnetic flux generated by the magnetic flux generation coil by adjusting the generated magnetic flux based on the detected value of the secondary side detection circuit.

### [Brief Description of the Drawings]

The above and other objects, features and advantages of the present disclosure will become more apparent from the following detailed description with reference to the accompanying drawings. The drawings are:
FIG. 1 is a schematic diagram of a wireless power transfer system;
FIG. 2 is a circuit diagram of a wireless power transfer system according to a first embodiment;
FIG. 3 is an illustration of changes over time in positional relationship between a primary side coil and a secondary side coil;
FIG. 4 is an illustration of a power transfer initiation sequence according to the first embodiment;
FIG. 5 is an illustration of a waveform of a control signal;
FIG. 6 is an illustration of a relationship between the drive frequency and the current flowing through the secondary side coil;
FIG. 7 is an illustration of a relationship between the waiting time and each period of burst driving;
FIG. 8 is an illustration of a relationship between the vehicle speed and the burst cycle;
FIG. 9 is a circuit diagram of a wireless power transfer system according to a second embodiment;
FIG. 10 is an illustration of a power transfer initiation sequence according to a second embodiment;
FIG. 11 is an illustration of control of a pulse generation circuit;
FIG. 12 is an illustration of an equivalent circuit and a method for calculating a coupling coefficient;
FIG. 13 is a circuit diagram of a wireless power transfer system according to a third embodiment;
FIG. 14 is an illustration of a power transfer initiation sequence according to the third embodiment;
FIG. 15 is a first flowchart of an abnormality detection process according to a fourth embodiment;
FIG. 16 is a second flowchart of an abnormality detection process according to the fourth embodiment;
FIG. 17 is a circuit diagram of a power reception device according to a fifth embodiment; and
FIG. 18 is a circuit diagram of a power reception device according to a sixth embodiment;
FIG. 19 is a circuit diagram of a power reception device according to a seventh embodiment.

### [Description of the Embodiments]

### A. First Embodiment:

### A1. Configuration of Wireless Power Transfer System:

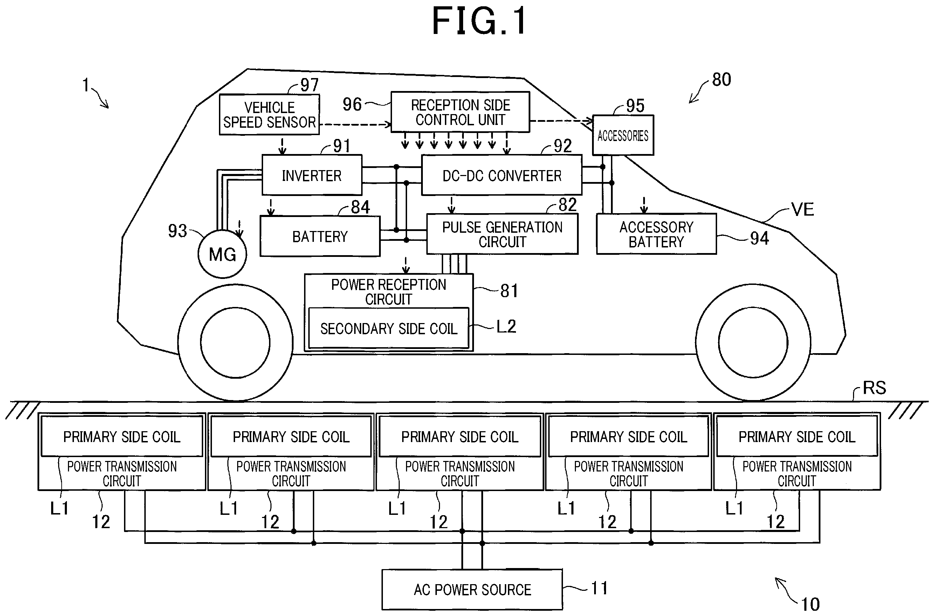

As illustrated in FIG. 1, a wireless power transfer system 1 includes a power transmission device 10 and a power reception device 80. In the present embodiment, the power transmission device 10 is embedded beneath a road RS. The power reception device 80 is mounted to a vehicle VE, which serves as a moving object traveling on the road RS. While the vehicle VE is traveling, the power reception device 80 receives power transferred from the power transmission device 10. Here, the phrase "While the vehicle VE is traveling" includes both when the vehicle VE is in motion and when the vehicle VE is temporarily stopped, for example, waiting for a traffic light. The vehicle VE may be configured, for example, as an electric vehicle or a hybrid vehicle. Here, the wireless power transfer system may also be referred to as a non-contact power feeding system, the power transmission device may also be referred to as a power transmitting device, and the power reception device may also be referred to as a power receiving device.

The power transmission device 10 includes primary side resonance circuits 12, each including a primary side coil L1, and an AC power source 11 configured to supply power to the primary side resonance circuits 12. The AC power source 11 supplies power to the plurality of primary side resonance circuits 12. The plurality of primary side coils L1 are arranged along the extending direction of the road RS.

It should be noted that the moving object on which the power reception device 80 is mounted is not limited to the vehicle VE traveling on the road RS, and may be, for example, an automated guided vehicle (AGV), a mobile robot or the like. The power transmission device 10 may be installed not beneath the road RS, but on a sidewalk or parking area adjacent to the road RS, or a path along which an AGV travels.

The power reception device 80 includes a battery 84, an accessory battery 94, a pulse generation circuit 82, a secondary side resonance circuit 81 including a secondary side coil L2, a DC-DC converter 92, an inverter 91, a motor-generator 93, accessories 95, a reception side control unit 96, and a vehicle speed sensor 97 serving as a speed acquisition unit. In the present embodiment, the secondary side coil L2 is provided on the underside of the vehicle VE, at a position facing the primary side coil L1.

The pulse generation circuit 82 is connected to the secondary side resonance circuit 81. In the present embodiment, the pulse generation circuit 82 functions as a rectifier during a power reception state of the power reception device 80, which will be described later, and functions as an inverter during a non-power-reception state of the power reception device 80, also described later. In the power reception state, the pulse generation circuit 82 converts AC power received by the secondary side resonance circuit 81 into DC power, and supplies the converted DC power to the battery 84, the DC-DC converter 92, and the inverter 91.

The battery 84 is a secondary battery that is charged by the supplied DC power. The inverter 91 drives the motor-generator 93 using the supplied DC power. The motor-generator 93 operates as a three-phase AC motor and generates a drive force for driving the vehicle VE. In addition, the motor-generator 93 operates as a generator during deceleration of the vehicle VE to regenerate electric power. The regenerated three-phase AC power is converted into DC power by the inverter 91 and used to charge the battery 84.

The DC-DC converter 92 steps down the DC power supplied from the pulse generation circuit 82, and supplies the stepped-down DC power to the accessory battery 94 and the accessories 95. The accessories 95 includes peripheral devices of the vehicle VE, such as an air conditioning system, an electric power steering system, headlights, turn signals, wipers, and accessories of the vehicle VE. The accessory battery 94 is a secondary battery configured to drive the accessories 95. The vehicle speed sensor 97 detects a travel speed of the vehicle VE and outputs a signal indicating the detected travel speed to the reception side control unit 96.

The reception side control unit 96 controls various components within the power reception device 80, such as the inverter 91. The reception side control unit 96 is implemented as including an engine control unit (ECU). The ECU may be configured as a single microcontroller or may be configured as including a plurality of microcontrollers. An example of a case in which a plurality of microcontrollers are included is a configuration that includes a microcontroller for controlling mechanisms related to driving of the vehicle VE, such as the motor-generator 93, and a microcontroller for controlling mechanisms related to the battery 84, such as the pulse generation circuit 82.

### A2. Circuit Configuration of Wireless Power Transfer System:

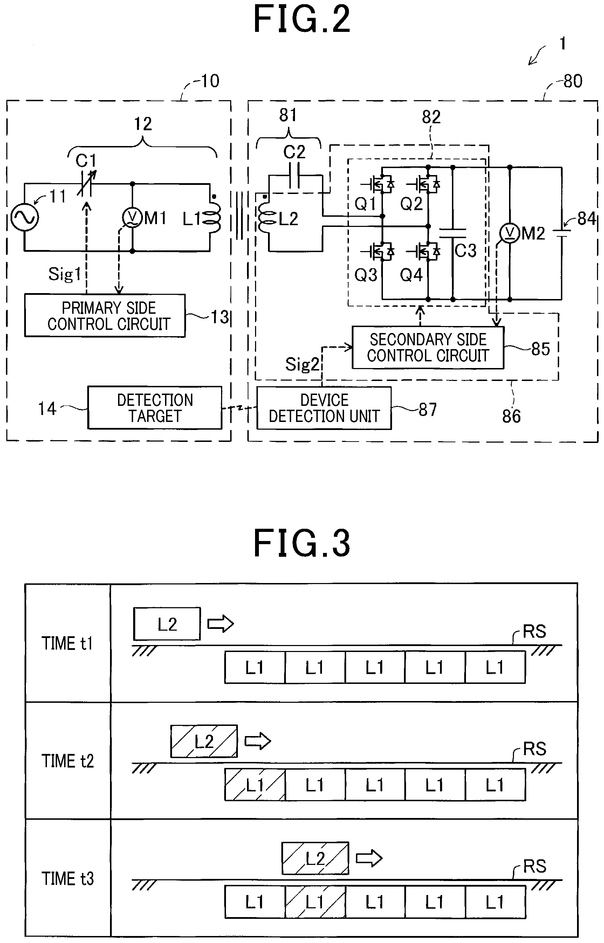

As illustrated in FIG. 2, in addition to the above-described configuration, the power transmission device 10 includes a primary side capacitor C1, which is a variable capacitor, a primary side voltage sensor M1 serving as a primary side detection circuit, a primary side control circuit 13, and a detection target 14. The primary side coil L1 and the primary side capacitor C1 are connected in series to form a primary side resonance circuit 12. It should be noted that, in FIG. 2, only one of the plurality of primary side resonance circuits 12 connected to the AC power source 11 is illustrated, and illustration of the other primary side resonance circuits 12 is omitted.

The AC power source 11 applies AC power having a predefined operating frequency to the primary side resonance circuit 12. In the present embodiment, the operating frequency is 85 kHz. The primary side capacitor C1 functions to place the primary side resonance circuit 12 in a resonance state at the operating frequency, and also to place the primary side resonance circuit 12 in a non-resonance state at the operating frequency. In the present embodiment, the primary side capacitor C1 is configured to be switchable between a first capacitance value and a second capacitance value that is less than the first capacitance value. The capacitance value of the primary side capacitor C1 is switched to either the first capacitance value or the second capacitance value in response to a switching signal Sig1 output from the primary side control circuit 13. When the primary side coil L1 and the secondary side coil L2 are magnetically coupled, and the primary side capacitor C1 has the first capacitance value, the primary side resonance circuit 12 is placed in the resonance state at the operating frequency. That is, the first capacitance value of the primary side capacitor C1 is set such that the resonance frequency of the primary side resonance circuit 12 matches the operating frequency. When the primary side capacitor C1 has the second capacitance value, the resonance frequency of the primary side resonance circuit 12 deviates from the operating frequency, and thus the primary side resonance circuit 12 is placed in the non-resonance state at the operating frequency.

The primary side voltage sensor M1 is provided to detect the magnitude of magnetic flux linking the primary side coil L1. The primary side voltage sensor M1 detects a voltage induced in the primary side coil L1 in response to a change in magnetic flux linking the primary side coil L1. The primary side voltage sensor M1 detects a voltage value of the primary side coil L1 and outputs a signal indicating the detected voltage value to the primary side control circuit 13. The primary side control circuit 13 uses the signal output from the primary side voltage sensor M1 to output a switching signal Sig1 to the primary side capacitor C1. Specifically, the primary side control circuit 13 outputs the switching signal Sig1 when the voltage value indicated by the signal is greater than a predefined threshold.

It should be noted that the primary side detection circuit is not limited to the voltage sensor configured to detect the voltage of the primary side coil L1, and may alternatively be a current sensor that detects a current flowing through the primary side coil L1. Alternatively, the primary side detection circuit may be a magnetic sensor that detects the magnitude of magnetic flux in the vicinity of the primary side coil L1, and more specifically, a magnetic sensor including a coil provided near the primary side coil L1. When the primary side detection circuit is a magnetic sensor, the power transmission device 10 transitions from a standby state to a power transmission state at step S4, described later, when an increase in magnetic flux in the vicinity of the primary side coil L1 is detected.

The detection target 14 is a two-dimensional code displayed on the surface of the road RS. As the two-dimensional code, various types of codes may be used, such as a QR Code (registered trademark), a Micro QR Code, an iQR Code (registered trademark), or a PDF417 code.

The power reception device 80 further includes, in addition to the above-described components, a secondary side capacitor C2, a secondary side voltage sensor M2 serving as a secondary side detection circuit, a secondary side control circuit 85, and a device detection unit 87. The secondary side coil L2 and the secondary side capacitor C2 are connected in series to form a secondary side resonance circuit 81. In the present embodiment, the secondary side coil L2 functions not only as a power reception coil, but also as a magnetic flux generation coil for generating magnetic flux radiated toward the primary side coil L1. A magnetic flux generation circuit 86 is formed of the secondary side coil L2 as the magnetic flux generation coil, the pulse generation circuit 82, and the secondary side control circuit 85.

The pulse generation circuit 82 is configured as a synchronous rectifier circuit. Specifically, the pulse generation circuit 82 includes four switching elements Q1, Q2, Q3, and Q4, and a smoothing capacitor C3. The four switching elements Q1 to Q4 form a bridge circuit. Accordingly, in the power reception state in which AC power is supplied from the secondary side resonance circuit 81, the pulse generation circuit 82 functions as a rectifier, and in the non-power-reception state in which DC power is supplied from the battery 84, the pulse generation circuit 82 functions as an inverter. In the present embodiment, the switching elements Q1 to Q4 are implemented using MOSFETs (metal-oxide-semiconductor field-effect transistors). Details of the pulse generation circuit 82 will be described later. The power source for the secondary side control circuit 85 and the device detection unit 87 is the battery 84.

The secondary side voltage sensor M2, as the secondary side detection circuit, is a voltage detection circuit that detects an output voltage value of the battery 84 and outputs a signal indicating the detected output voltage value to the secondary side control circuit 85. The secondary side control circuit 85 drives the pulse generation circuit 82 based on the signal output from the secondary side voltage sensor M2. Specifically, the pulse generation circuit 82 inputs control signals to the gate terminals of the switching elements Q1 to Q4. Details of the driving operation performed by the secondary side control circuit 85 will be described later.

The device detection unit 87 detects the detection target 14. The device detection unit 87 is a two-dimensional code reader capable of reading two-dimensional codes. In the present embodiment, the device detection unit 87 detects a QR Code (registered trademark) by imaging. When the detected QR Code (registered trademark) matches a predefined code, the device detection unit 87 outputs a signal Sig2 to the secondary side control circuit 85. Upon receipt of the signal Sig2, the secondary side control circuit 85 drives the pulse generation circuit 82 to cause the pulse generation circuit 82 to supply AC power.

When the primary side coil L1 and the secondary side coil L2 are magnetically coupled, the resonance frequency of the primary side resonance circuit 12 and the resonance frequency of the secondary side resonance circuit 81 are set to be substantially the same. This enables wireless power transfer to the power reception device 80 through magnetically-coupled resonance between the primary side coil L1 and the secondary side coil L2. As described above, the DC power output from the secondary side resonance circuit 81 is rectified by the pulse generation circuit 82 and supplied to the battery 84.

### A3. Standby State and Power Transmission State:

As illustrated in FIG. 3, the primary side coils L1 are arranged along the longitudinal direction of the road RS, and the secondary side coil L2 receives wireless power from the nearest primary side coil L1. In FIG. 3, the primary side coil L1 and secondary side coil L2, which are transmitting and receiving power, are hatched. That is, the primary side coils L1 that are not hatched are the primary side coils L1 in the standby state, and the primary side coil L1 that is hatched is the primary side coil L1 in the power transmission state. The arrows in FIG. 3 indicate the traveling direction of the vehicle VE to which the secondary side coil L2 is mounted. At time t1 illustrated in FIG. 3, the secondary side coil L2 is approaching the arrayed primary side coils L1. At time t2 illustrated in FIG. 3, when the secondary side coil L2 approaches the endmost primary side coil L1, a power transfer initiation sequence, described later, is performed and wireless power transfer is initiated. At time t3 illustrated in FIG. 3, when the vehicle VE advances such that the distance between the secondary side coil L2 and the primary side coil L1 adjacent to the endmost primary side coil L1 becomes shorter than the distance between the secondary side coil L2 and the primary side coil L1, the primary side coil L1 involved in power transfer switches from the endmost primary side coil L1 to the primary side coil L1 adjacent to the endmost primary side coil L1.

The power transfer is performed not only when the entire primary side coil L1 is facing the secondary side coil L2 in the direction of the coil central axis of the primary side coil L1, as illustrated at time t3 in FIG. 3, but also when only a portion of the primary side coil L1 is facing the secondary side coil L2, as illustrated at time t2 in FIG. 3.

### A4. Power Transfer Initiation Sequence:

The wireless power transfer system 1 initiates and terminates power transfer between the power transmission device 10 and the power reception device 80 without using communication. In the present embodiment, when enabling power reception by the secondary side resonance circuit 81, the reception side control unit 96 outputs a power transfer enable signal to the secondary side control circuit 85. When inhibiting power transfer by the secondary side resonance circuit 81, the reception side control unit 96 outputs a power transfer inhibition signal to the secondary side control circuit 85. For example, when the battery 84 is in a state unsuitable for charging, the reception side control unit 96 outputs the power transfer inhibition signal. In the following description, each step will be described for ease of understanding.

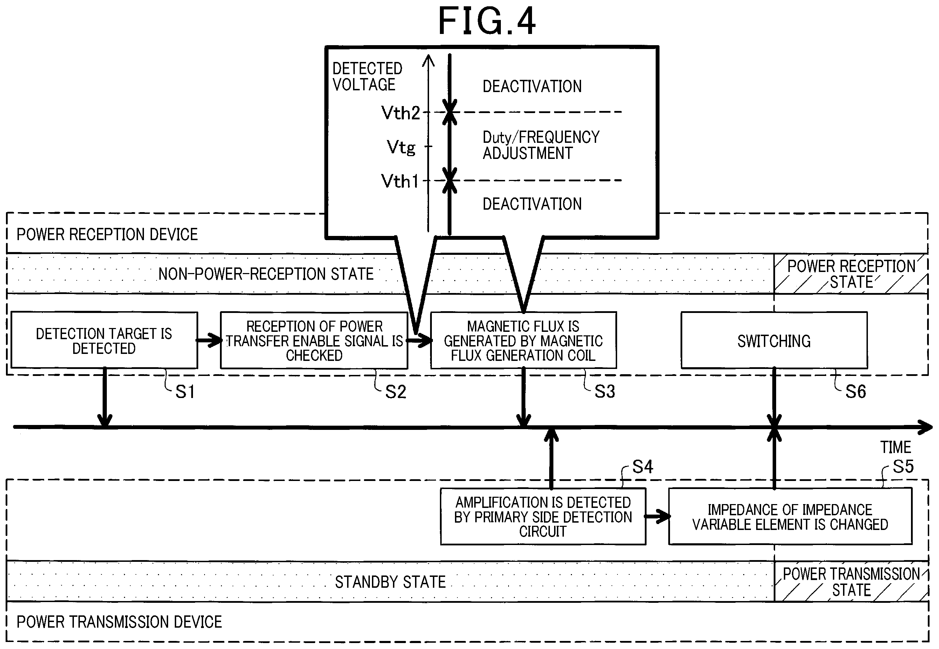

When the power reception device 80 approaches the power transmission device 10, the device detection unit 87 of the power reception device 80, at step S1 of FIG. 4, detects a detection target 14 of the power transmission device 10. Upon detecting the detection target 14, the device detection unit 87 outputs a signal Sig2 to the secondary side control circuit 85.

Upon receipt of the signal Sig2, the secondary side control circuit 85 checks, at step S2, whether the power transfer enable signal has been received. With the power transfer enable signal having been received, the device detection unit 87 drives the pulse generation circuit 82 to supply AC power to the secondary side coil L2 at the resonance frequency or at a frequency close to the resonance frequency. At step S3 of FIG. 4, the secondary side coil L2, which functions as a magnetic flux generation coil, thereby generates a magnetic flux. This allows the magnetic flux linking the primary side coil L1 to increase, causing an electromotive force to be generated in the primary side coil L1 by electromagnetic induction, and the voltage of the primary side coil L1 increases.

When the power transfer inhibition signal has been received instead of the power transfer enable signal, the secondary side control circuit 85 skips step S3 and places the pulse generation circuit 82 in a deactivated state described later. This makes it possible to avoid power transfer when the battery 84 is not in a state suitable for charging. In another embodiment, when the power transfer inhibition signal has been received, the secondary side control circuit 85 may transition to a waiting state for receipt of the power transfer enable signal without performing step S3, and may initiate driving in response to receipt of a power transfer initiation signal to perform step S3. Accordingly, even in the case where the power transfer inhibition signal has been received when the signal Sig2 is received, power transfer can be implemented in response to receipt of the power transfer initiation signal.

At step S4 of FIG. 4, the primary side control circuit 13 outputs a switching signal Sig1 to the primary side capacitor C1 when an increase in magnetic flux linking the primary side coil L1 is detected. Specifically, when the primary side control circuit 13 determines that the voltage value indicated by the signal output from the primary side voltage sensor M1 exceeds a threshold, the primary side control circuit 13 outputs a switching signal Sig1 to the primary side capacitor C1. As a result, at step S5 of FIG. 4, the capacitance value of the primary side capacitor C1, which serves as a variable impedance element, is switched from a second capacitance value to a first capacitance value. Accordingly, the primary side resonance circuit 12 is placed in the resonance state at the resonance frequency fs, and transitions to the power transmission state in which a transmission current flows through the primary side coil L1, and power transfer is thereby initiated. In this manner, when an increase in magnetic flux linking the primary side coil L1 is detected by the primary side voltage sensor M1, the power transmission device 10 transitions from the standby state to the power transmission state. At the time the capacitance value of the primary side capacitor C1 is switched, the power transmission device 10 transitions from the standby state to the power transmission state. At step S6, as a switching process, the drive mode of the pulse generation circuit 82 is switched from a suspend drive mode, described later, to a rectification drive mode in which the pulse generation circuit 82 functions as a rectifier. As a result, the power reception device 80 transitions from the non-power-reception state to the power reception state. Specifically, the secondary side control circuit 85 detects the start of power transmission by the power transmission device 10 by detecting a current flowing through a current path that includes the body diode of the switching element Q1 and the body diode of the switching element Q4, caused by the electromotive force generated in the secondary side coil L2, using a voltage sensor (not shown) that detects the source-drain voltage of the switching element Q4. In the power reception state, the secondary side control circuit 85 drives the pulse generation circuit 82 in synchronization with the phase of the AC power received by the secondary side coil L2, such that the pulse generation circuit 82 functions as a rectifier. As described above, since the wireless power transfer between the power transmission device 10 and the power reception device 80 is initiated without using communication, wireless power transfer can be initiated earlier as compared with the case in which communication is used for initiating power transfer.

### A5. Control by Secondary Side Control Circuit:

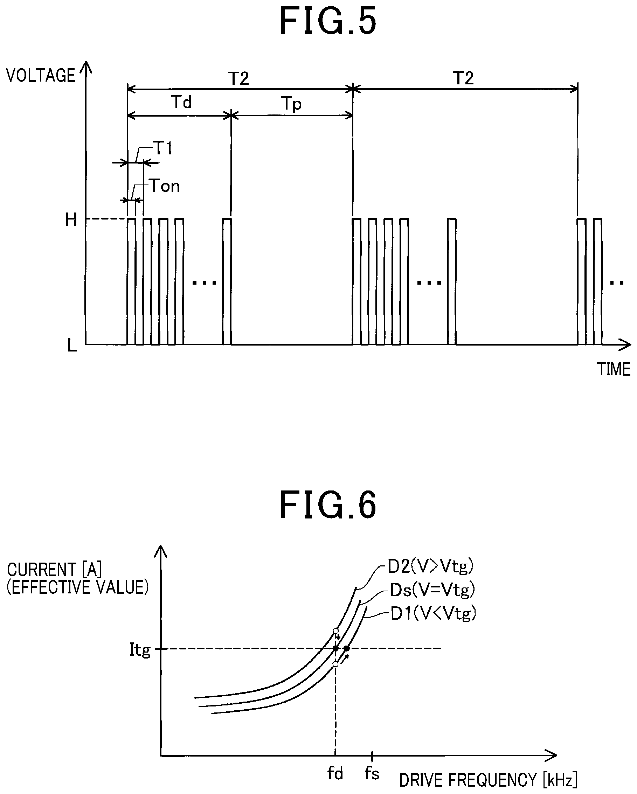

At step S3 in FIG. 3, the pulse generation circuit 82 converts DC power supplied from the battery 84 into AC power and supplies it to the secondary side resonance circuit 81. Here, the output voltage value of the battery 84 may deviate from a target voltage value Vtg (FIG. 6). In addition, the current flowing through the secondary side coil L2 is proportional to the output voltage value of the battery 84. Accordingly, when the output voltage value of the battery 84 is lower than the target voltage value Vtg, the magnetic flux generated by the secondary side coil L2 at step S3 becomes less than the target magnetic flux, and despite the secondary side coil L2 approaching, the magnetic flux linking the primary side coil L1 becomes insufficient, which may result in a failure to initiate power transfer. Conversely, when the output voltage value of the battery 84 is higher than the target voltage value Vtg, the magnetic flux generated by the secondary side coil L2 at step S3 may exceed the target magnetic flux, which may cause malfunctions in the primary side resonance circuit 12. Therefore, in the present embodiment, the pulse generation circuit 82 is appropriately driven using the output power value of the battery 84. The magnitude of the magnetic flux generated in the secondary side coil L2 at step S3 can be appropriately set.

As described above, the pulse generation circuit 82 illustrated in FIG. 2 includes four switching elements Q1, Q2, Q3, and Q4. When causing the pulse generation circuit 82 to function as an inverter, the secondary side control circuit 85 complementarily drives the switching elements Q1 and Q2, which constitute the upper arm connected to the positive terminal of the battery 84. Similarly, the secondary side control circuit 85 complementarily drives the switching elements Q3 and Q4, which constitute the lower arm connected to the negative terminal of the battery 84. The switching elements Q1 and Q4 are simultaneously turned on by simultaneously receiving on signals, and are simultaneously turned off by simultaneously receiving off signals. Similarly, the switching elements Q2 and Q3 are simultaneously turned on by simultaneously receiving on signals, and are simultaneously turned off by simultaneously receiving off signals.

FIG. 5 is an illustration of waveforms of control signals input to switching elements Q1 and Q4. As illustrated in FIG. 5, in the non-power-reception state, the secondary side control circuit 85 periodically repeats a power-supply drive mode to cause the pulse generation circuit 82 to supply AC power to the secondary side coil L2, and a suspend drive mode to cause the pulse generation circuit 82 to suspend supply of AC power to the secondary side coil L2. Specifically, the secondary side control circuit 85 performs burst driving, in which a drive period Td during which an on signal is output and a suspend period Tp during which no on signal is output are repeated periodically at a second period T2. Accordingly, the pulse generation circuit 82 is driven intermittently. That is, the secondary side control circuit 85 outputs an on signal to the pulse generation circuit 82 during the power-supply drive mode, and does not output the on signal during the suspend drive mode. Here, the on signal refers to a high-level signal for turning on the switching element Q1. The off signal refers to a low-level signal for turning off the switching element Q1. The same applies to the switching elements Q2 to Q3. During the suspend period Tp, the off signals are output to the switching elements Q1 to Q4. The secondary side control circuit 85 adjusts the frequency and duty ratio of the control signal input to the pulse generation circuit 82. Here, the duty ratio is defined as a ratio of an on period Ton, during which the on signal is output, relative to a first period T1 during a drive period Td.

When the frequency of the AC power supplied to the secondary side resonance circuit 81 is the resonance frequency fs (FIG. 6), the current flowing through the secondary side coil L2 becomes a maximum. When the frequency of the AC power supplied to the secondary side resonance circuit 81 deviates from the resonance frequency fs, the current flowing through the secondary side coil L2 varies depending on the frequency. Therefore, when the output voltage value of the battery 84 deviates from the target voltage value Vtg, the current flowing through the secondary side coil L2 can be adjusted by adjusting the drive frequency of the pulse generation circuit 82. The drive frequency of the pulse generation circuit 82 is (1/T1), using the first period T1.

Adjusting the duty ratio of the control signal input to the pulse generation circuit 82 allows the effective voltage of the AC power input to the secondary side resonance circuit 81 to be adjusted. As a result, it is possible to adjust the current flowing through the secondary side coil L2. Specifically, the smaller the duty ratio, the lower the effective voltage of the AC power input to the secondary side resonance circuit 81, and the smaller the current flowing through the secondary side coil L2.

FIG. 6 is an illustration of the relationship between the drive frequency (horizontal axis) and the current flowing through the secondary side coil L2 (vertical axis). The characteristic line Ds illustrated in FIG. 6 represents a characteristic line when the output voltage value of the battery 84 is equal to the target voltage value Vtg. The characteristic line D1 represents a characteristic line when the output voltage value of the battery 84 is less than the target voltage value Vtg. The characteristic line D2 represents a characteristic line when the output voltage value of the battery 84 is greater than the target voltage value Vtg. The duty ratios of the characteristic lines Ds, D1, and D2 are all identical and correspond to a reference duty ratio.

As illustrated in FIG. 6, a target current value Itg, which is a target value of a current flowing through the secondary side coil L2, is a current value flowing through the secondary side coil L2 when the output voltage value of the battery 84 is equal to the target voltage value Vtg, the drive frequency is a reference frequency fd, and the duty ratio is the reference duty ratio. The reference frequency fd is lower than the resonance frequency fs. When the output voltage value of the battery 84 is higher than the target voltage value Vtg, the secondary side control circuit 85 lowers the voltage supplied to the secondary side coil L2 by lowering the duty ratio from the reference duty ratio. This allows the current flowing through the secondary side coil L2 to be adjusted to the target current value Itg. Conversely, when the output voltage value of the battery 84 is lower than the target voltage value Vtg, the secondary side control circuit 85 increases the drive frequency from the reference frequency fd toward the resonance frequency fs. This allows the current flowing through the secondary side coil L2 to be adjusted to the target current value Itg. Therefore, even when the output voltage value of the battery 84 deviates from the target voltage value Vtg, an appropriate current can be supplied to the secondary side coil L2. In the present embodiment, the reference duty ratio is 50%.

It should be noted that the drive mode in the case where the output voltage value of the battery 84 deviates from the target voltage value Vtg is not limited to the above. In the above example, when the output voltage value is higher than the target voltage value Vtg, the duty ratio is adjusted, and when the output voltage value is lower than the target voltage value Vtg, the drive frequency is adjusted. However, regardless of whether the output voltage value is higher or lower than the target voltage value Vtg, adjusting at least one of the drive frequency and the duty ratio allows the current value flowing through the secondary side coil L2 to be adjusted to the target current value Itg.

Furthermore, the secondary side control circuit 85 ceases supply of AC power by the pulse generation circuit 82 when a detected value of the secondary side voltage sensor M2 is outside a predefined range. Specifically, as illustrated in FIG. 4, when the detected value of the secondary side voltage sensor M2 is lower than a first threshold value Vth1 or higher than a second threshold value Vth2, the pulse generation circuit 82 is deactivated. Specifically, off signals are input to all of the switching elements Q1 to Q4. When the output voltage value of the battery 84 is lower than the first threshold value Vth1, the battery 84 may, for example, be improperly connected. When the battery voltage exceeds the second threshold value Vth2, an abnormality may have occurred in the battery 84. In such an abnormal condition, ceasing the current supply to the secondary side coil L2 can avoid generation of an overvoltage in the secondary side control circuit 85, which may be caused by the power transmission device 10 transitioning to the power transmission state and power reception at the secondary side resonance circuit 81 being thereby initiated.

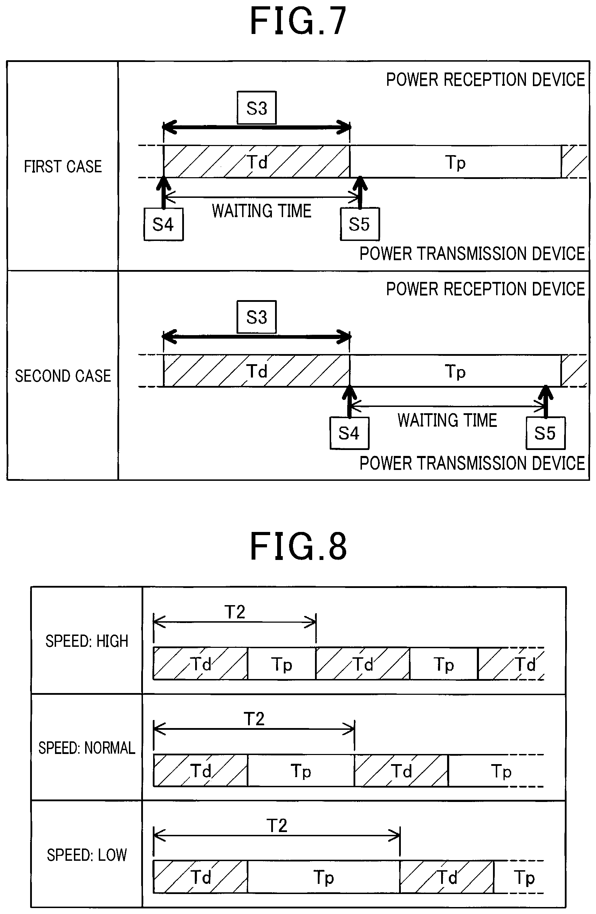

Furthermore, in the wireless power transfer system 1, a device is provided to prevent the magnetic flux generated by the secondary side coil L2 from overlapping with the magnetic flux generated by the primary side coil L1. Specifically, as illustrated in the "First Case" of FIG. 7, the time period from step S4 to step S5 in the power transmission device 10 is set to be longer than the drive period Td in the power reception device 80. As described above, the secondary side control circuit 85 drives the pulse generation circuit 82 in the power-supply drive mode during the drive period Td. That is, during the drive period Td, the secondary side coil L2 continuously generates the magnetic flux. The power transmission device 10 transitions to the power transmission state by performing step S5 after a waiting time has elapsed from when an increase in magnetic flux linking the primary side coil L1 is detected at step S4 by the primary side voltage sensor M1. The waiting time is set longer than a response time required by the primary side control circuit 13 to perform step S4. The waiting time is a predefined time during which the power transmission device 10 transitions to the power transmission state during the suspend period Tp of the power reception device 80. Accordingly, even when step S4 is performed at the beginning of the drive period Td, step S5 is performed during the suspend period Tp. As illustrated in the "Second Case" of FIG. 7, even when step S4 is performed at the end of the drive period Td, the length of the waiting time is set so that step S5 is performed during the suspend period Tp. This makes it possible to avoid the overlap of magnetic flux generation between the secondary side coil L2 and the primary side coil L1, thereby preventing occurrence of overvoltage and overcurrent.

Furthermore, the secondary side control circuit 85 adjusts the duration of the suspend drive mode, specifically, a length of the suspend period Tp, based on the vehicle speed. As illustrated in FIG. 8, when the vehicle speed is higher than a reference speed, the suspend period Tp is set greater than the reference length. Conversely, when the vehicle speed is lower than the reference speed, the suspend period Tp is set less than the reference length. In the wireless power transfer system 1, when the secondary side coil L2 approaches to a position where wireless power transfer is enabled from the primary side coil L1, wireless power transfer is initiated. The change over time of the distance between the primary side coil L1 and the secondary side coil L2 depends on the travel speed of the vehicle VE. Therefore, by adjusting the suspend period Tp according to the travel speed, step S3 can be performed at an appropriate time interval in response to the change over time of the distance between the primary side coil L1 and the secondary side coil L2. Specifically, the length of the suspend period Tp is determined using a map that associates the vehicle speed with the length of the suspend period Tp in advance. This map is stored in the reception side control unit 96, and the length of the suspend period Tp determined based on the map is output from the reception side control unit 96 to the secondary side control circuit 85. In another embodiment, the map may be stored in the secondary side control circuit 85, and the secondary side control circuit 85 may set the length of the suspend period Tp based on a signal indicating the vehicle speed output from the reception side control unit 96.

According to the first embodiment described above, when an increase in the magnetic flux linking the primary side coil L1 is detected by the primary side voltage sensor M1, the power transmission device 10 transitions from the standby state to the power transmission state. Accordingly, wireless power transfer can be initiated at an early stage. The magnetic flux generation circuit 86 adjusts the magnitude of the magnetic flux generated by the secondary side coil L2 based on the detected value of the secondary side voltage sensor M2. As a result, the magnetic flux density of the magnetic flux to be generated by the secondary side coil L2 for triggering the power transmission by the power transmission device 10 can be properly adjusted.

In the non-power-reception state, the secondary side control circuit 85 adjusts the magnitude of the generated magnetic flux using the voltage value detected by the primary side voltage sensor M1, which detects the output voltage value of the battery 84. Accordingly, even when the output voltage value of the battery 84 deviates from the target voltage value Vtg, the magnetic flux generated by the secondary side coil L2 can be appropriately adjusted.

The secondary side control circuit 85 adjusts the generated magnetic flux by adjusting at least one of the drive frequency and the duty ratio of the pulse generation circuit 82. This allows the secondary side control circuit 85 to adjust the generated magnetic flux by adjusting either the drive frequency or the duty ratio.

The secondary side control circuit 85 ceases supply of alternating current by the pulse generation circuit 82 when the detected value of the secondary side voltage sensor M2 is lower than the first threshold Vth1 or higher than the second threshold Vth2. In the event of occurrence of an abnormality in the power reception device 80, this can avoid overvoltage in the secondary side control circuit 85, which may occur when the pulse generation circuit 82 is deactivated, the power transmission device 10 transitions to the power transmission state, and power reception in the secondary side resonance circuit 81 is initiated.

The power transmission device 10 transitions to the power transmission state at step S5 after the waiting time has elapsed from when an increase in magnetic flux in the vicinity of the primary side coil L1 is detected by the primary side detection circuit at step S4. This can avoid overlap of magnetic flux generation by the secondary side coil L2 with that by the primary side coil L1, thus avoiding overvoltage and overcurrent.

When the power transfer inhibition signal has been received, the secondary side control circuit 85 does not perform step S3. This can avoid power transfer when the battery 84 is not in a state suitable for charging. When the power transfer inhibition signal has been received, the secondary side control circuit 85 skips step S3 and transitions to the waiting state for receipt of the power transfer enable signal, and performs step S3 in response to receipt of the power transfer enable signal. Accordingly, even when the power transfer inhibition signal has been received at the time when the signal Sig2 is received, power transfer is enabled in response to receipt of the power transfer enable signal.

The secondary side control circuit 85 adjusts the length of the suspend period Tp according to the vehicle speed. Accordingly, the secondary side control circuit 85 can perform step S3 at an appropriate time interval in accordance with changes over time of the distance between the primary side coil L1 and the secondary side coil L2.

### B. Second Embodiment:

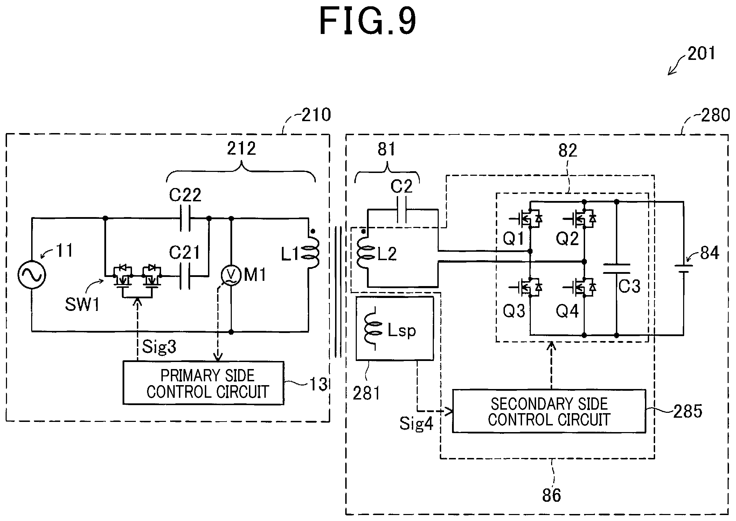

As illustrated in FIG. 9, a wireless power transfer system 201 according to the present embodiment differs from the first embodiment in the circuit configuration of a power transmission device 210 and a power reception device 280. The same reference numerals are assigned to the components that are the same as those in the first embodiment, and detailed descriptions thereof are omitted as appropriate.

The power transmission device 210 according to the present embodiment differs from the power transmission device 10 of the first embodiment in the configuration for changing the impedance of the primary side resonance circuit 212. The power transmission device 210 includes a first switch SW1 and capacitors C21 and C22. The capacitor C22 is connected in parallel with a connection between the first switch SW1 and the capacitor C21. The capacitance value of the capacitor C22 is less than that of the capacitor C21. A switching signal Sig3 is input to the first switch SW1 from the control circuit 50.

When a high-level switching signal Sig3 is input to the first switch SW1, the first switch SW1 is turned on, and current flows through the capacitor C21. Here, the combined capacitance of the capacitor C21 and the capacitor C22 and the inductance of the primary side coil L₁ are set to values that establish a resonance state at the operating frequency. Accordingly, when the first switch SW1 is turned on, the primary side resonance circuit 212 is formed, which is a series resonance circuit formed of the capacitor C21, the capacitor C22, and the primary side coil L1. Conversely, when a low-level switching signal Sig3 is input to the first switch SW1, the first switch SW1 is turned off, and the capacitor C21 becomes non-conductive. Then, the resonance frequency of the resonance circuit formed of the capacitor C22 and the primary side coil L1 deviates from the operating frequency, placing the primary side coil L1 in the standby state. Further, since the capacitance value of the capacitor C22 is less than that of the capacitor C21, when the first switch SW1 is in the off state, the impedance of the primary side resonance circuit 212 with respect to the input AC power increases, and the current flowing through the primary side resonance circuit 212 is suppressed. The current flowing through the primary side coil L1 in the standby state is referred to as standby current.

The power reception device 280 according to the present embodiment includes a magnetic flux detection circuit 281, which serves as a secondary side detection circuit that detects the magnitude of magnetic flux radiated from the primary side coil L1, instead of the secondary side voltage sensor M2 of the first embodiment. The magnetic flux detection circuit 281 detects the magnitude of the magnetic flux generated from the primary side coil L1. Specifically, the magnetic flux detection circuit 281 incorporates a detection coil Lsp disposed near the secondary side coil L2, and detects the magnitude of magnetic flux density based on the voltage of the detection coil Lsp. The magnetic flux detection circuit 281 outputs a signal Sig4 indicating the detected magnetic flux density to the secondary side control circuit 285. More specifically, the detection coil Lsp is positioned such that it magnetically couples with the primary side coil L1 when the primary side coil L1 and the secondary side coil L2 are magnetically coupled. Accordingly, the detection coil Lsp can detect the magnitude of the magnetic flux linking the primary side coil L1 when the secondary side coil L2 is not generating magnetic flux. It should be noted that detecting the magnitude of magnetic flux linking the primary side coil L1 includes not only detecting the entire magnetic flux linking the primary side coil L1, but also detecting a portion of the magnetic flux, as in the present embodiment. In the present embodiment, the magnetic flux density detected by the secondary side voltage sensor M2 decreases as the distance from the primary side coil L1 increases. That is, the detected value of the secondary side voltage sensor M2 varies not only with the magnitude of the magnetic flux generated by the primary side coil L1 but also with the distance between the primary side coil L1 and the secondary side voltage sensor M2.

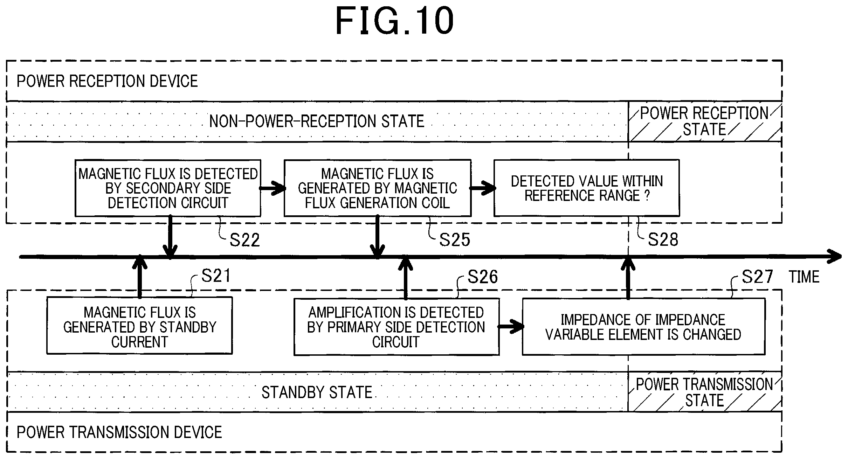

The power transfer initiation sequence in the present embodiment differs from that of the first embodiment. In the standby state of the power transmission device 10, as illustrated in FIG. 10, a standby current flows through the primary side coil L1 when the first switch SW1 is placed in the off state. At step S21, the standby current flowing through the primary side coil L1 causes the primary side coil L1 to generate magnetic flux.

As the secondary side coil L2 approaches the primary side coil L1, the magnetic flux density detected at step S22 by the magnetic flux detection circuit 281 increases. When the magnetic flux density indicated by the signal Sig4 exceeds a predefined threshold, the secondary side control circuit 285 outputs an on signal to drive the pulse generation circuit 82. As a result, at step S25, the secondary side coil L2 as the magnetic flux generation coil generates magnetic flux. This amplifies the magnetic flux linking the primary side coil L1.

At step S26, when the primary side control circuit 13 determines, based on the detected value of the primary side voltage sensor M1 serving as a primary side detection circuit, that the magnetic flux linking the primary side coil L1 has increased, the primary side control circuit 13 switches the voltage level of the switching signal Sig3. Specifically, when it is determined that the voltage value indicated by the signal output from the primary side voltage sensor M1 exceeds the threshold, the high-level switching signal Sig3 is output to the first switch SW1. As a result, at step S25, the combined capacitance of the capacitors C21 and C22, which serve as a variable impedance element, is changed. Accordingly, the primary side resonance circuit 212 is placed in the resonance state at the operating frequency, and power transfer is initiated.

In the present embodiment, after driving the pulse generation circuit 82 in the power-supply drive mode, the secondary side control circuit 285 continues the suspend drive mode for a predefined period or longer when the detected value of the magnetic flux detection circuit 281 is within a predefined magnetic flux range. Specifically, after performing step S25, the secondary side control circuit 285 performs step S28 within the suspend period Tp. At step S28, the secondary side control circuit 285 determines whether the magnetic flux density indicated by signal Sig4 output from the magnetic flux detection circuit 281 is greater than a predefined first threshold. When the magnetic flux density indicated by signal Sig4 is greater than the first threshold, the secondary side control circuit 285 determines that power transmission by the power transmission device 210 is in progress, and thus does not change the length of the suspend period Tp. In such a case, that is, when power is being transmitted by the power transmission device 210, the secondary side control circuit 285 detects power reception by the secondary side coil L2 using a voltage sensor (not shown), thereby allowing the pulse generation circuit 82 to function as a rectifier. On the other hand, when the magnetic flux density indicated by signal Sig4 is equal to or less than the first threshold, the secondary side control circuit 285 determines that either power transmission by the power transmission device 210 is not being performed or the distance between the primary side coil L1 and the secondary side coil L2 is so long that the transmitted power cannot be received by the secondary side coil L2. In such cases, the suspend period Tp is extended to continue the suspend drive mode for the predefined period or longer. Extending the duration of the suspend drive mode during which the pulse generation circuit 82 is not driven can suppress power consumption of the battery 84. The secondary side control circuit 285 may drive the pulse generation circuit 82 after the suspend drive mode has continued for the predefined period or longer, and may further maintain the suspend drive mode beyond the predefined period. As described above, the detected value of the magnetic flux detection circuit 281 being within the predefined magnetic flux range means that the detected value is equal to or less than the first threshold.

The secondary side control circuit 285 ceases the power-supply drive mode when the detected value of the magnetic flux detection circuit 281 is outside predefined magnetic flux range. Specifically, the secondary side control circuit 285 determines whether the magnetic flux density indicated by the signal Sig4 output from the magnetic flux detection circuit 281 is greater than a predefined second threshold. The second threshold is set to be greater than the first threshold. When the magnetic flux density indicated by signal Sig4 is greater than the second threshold, the secondary side control circuit 285 ceases the power-supply drive mode. This can avoid occurrence of a malfunction in the primary side resonance circuit 212 caused by an excessive electromotive force being induced in the primary side coil L1 by the magnetic flux generated by the secondary side coil L2. As described above, the detected value of the magnetic flux detection circuit 281 being outside the predefined magnetic flux range means that the detected value is greater than the second threshold.

Also in the present embodiment, as in the first embodiment, the secondary side control circuit 285 adjusts the drive frequency and duty ratio of the pulse generation circuit 82. However, while the secondary side control circuit 85 in the first embodiment performs the adjustment based on the detected value of the secondary side voltage sensor M2, the secondary side control circuit 285 in the present embodiment performs the adjustment based on the detected value of the magnetic flux detection circuit 281. The detected value of the secondary side voltage sensor M2 increases as the distance between the primary side coil L1 and the secondary side coil L2 decreases and as a coupling coefficient between the primary side coil L1 and the secondary side coil L2 increases. Accordingly, when the coupling coefficient between the primary side coil L1 and the secondary side coil L2 is greater than a predefined threshold, at least one of the drive frequency and the duty ratio of the pulse generation circuit 82 is adjusted, as in the first embodiment, so that the magnetic flux generated by the secondary side coil L2 does not become excessively large.

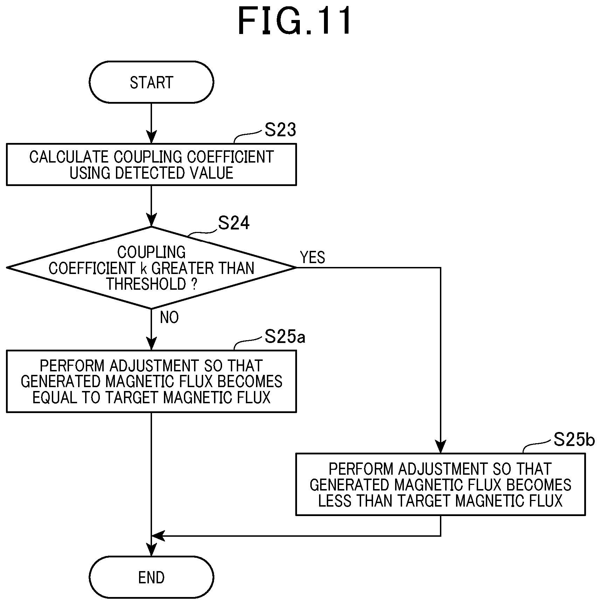

Specifically, the secondary side control circuit 285 receives the signal indicating the magnetic flux density detected at step S22 illustrated in FIG. 10, and calculates the coupling coefficient at step S23 illustrated in FIG. 11 when the magnetic flux density is equal to or greater than the first threshold and less than the second threshold. The secondary side control circuit 285 calculates the coupling coefficient using a calculation formula pre-stored in a built-in memory.

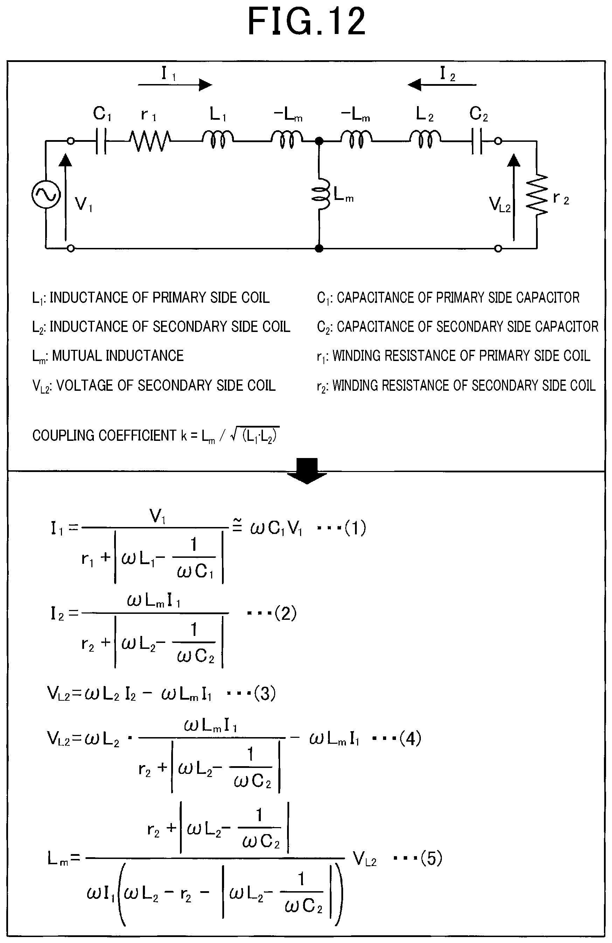

The equivalent circuit illustrated in the upper portion of FIG. 12 is an equivalent circuit used in derivation of the calculation formula for determining the coupling coefficient. The equivalent circuit illustrated in FIG. 12 is an extended equivalent circuit in which "-Lₘ" is depicted separately. The lower portion of FIG. 12 illustrates a derivation process of Equation (5) used to calculate the mutual inductance Lₘ.

The current I₁ of the primary side coil meets Equation (1) illustrated in the lower portion of FIG. 12. The current I₂ of the secondary side coil meets Equation (2). When the secondary side resonance circuit is not in resonance, the voltage V_{L2} of the secondary side coil meets Equation (3). Equation (4) is obtained by substituting Equation (2) into the current I₂ in Equation (3). Equation (5) is obtained by rearranging Equation (4). The current I₁ in Equation (5) corresponds to the standby current and is known. Since values of the other parameters are also known, a value of the mutual inductance Lₘ can be derived when the voltage V_{L2} of the secondary side coil is given. The coupling coefficient k can be calculated based on the values of the mutual inductance Lₘ, the inductance L₁ of the primary side coil, and the inductance L₂ of the secondary side coil. In the present embodiment, a map indicating the relationship between the detected value of the magnetic flux detection circuit 281 and the voltage V_{L2} of the secondary side coil is pre-stored in the memory of the secondary side control circuit 285. The secondary side control circuit 285 uses this map to convert the detected value of the magnetic flux detection circuit 281 into the voltage V_{L2} of the secondary side coil and calculates the coupling coefficient k. The values of inductance L₁ and L₂ are also pre-stored in the memory of the secondary side control circuit 285.

The secondary side control circuit 285 changes the drive mode of the pulse generation circuit 82 depending on whether the calculated coupling coefficient k is greater than the predefined threshold. If the answer is "NO" at step S24, that is, if the calculated coupling coefficient k is not greater than the predefined threshold, the secondary side control circuit 285 drives the pulse generation circuit 82 at step S25a so that the generated magnetic flux becomes equal to the target magnetic flux. On the other hand, if the answer is "YES" at step S24, that is, if the calculated coupling coefficient k is greater than the predefined threshold, the secondary side control circuit 285 drives the pulse generation circuit 82 at step S25b so that the generated magnetic flux becomes less than the target magnetic flux. Specifically, the secondary side control circuit 285 controls the pulse generation circuit 82 so that the current flowing through the secondary side coil L2 is reduced. This can avoid occurrence of a malfunction in the primary side resonance circuit 212 due to an increase in the electromotive force induced in the primary side coil L1 by the magnetic flux generated by the secondary side coil L2 when the distance between the primary side coil L1 and the secondary side coil L2 is shorter than that defined by a design condition.

Further, the secondary side control circuit 85 performs maximum efficiency control using the calculated coupling coefficient k. The maximum efficiency control refers to control for maximizing the power transfer efficiency. Specifically, the secondary side control circuit 285 adjusts the voltage of the AC power supplied to the secondary side resonance circuit 81 by adjusting the drive frequency of the pulse generation circuit 82.

According to the second embodiment described above, the secondary side control circuit 285 drives the pulse generation circuit 82 using the magnetic flux detection circuit 281, thereby achieving the same effect as in the first embodiment. After performing the power-supply drive mode, the secondary side control circuit 285 continues the suspend drive mode for a predefined time or more when the detected value of the magnetic flux detection circuit 281 is within the magnetic flux range, that is, when the detected value of the magnetic flux detection circuit 281 is equal to or less than the first threshold. This can suppress the power consumption of the battery 84. Further, when the detected value of the magnetic flux detection circuit 281 is outside the magnetic flux range, that is, when the detected value exceeds the second threshold, the supply of AC current to the secondary side coil L2 by the pulse generation circuit 82 is ceased. This can avoid occurrence of a malfunction in the primary side resonance circuit 212 caused by an increase in the electromotive force induced in the primary side coil L1 due to the magnetic flux generated by the secondary side coil L2. Further, the secondary side control circuit 285 performs control to maximize the power transfer efficiency using the calculated coupling coefficient k. This can optimize the power transfer efficiency in the wireless power transfer system 1.

### C. Third Embodiment:

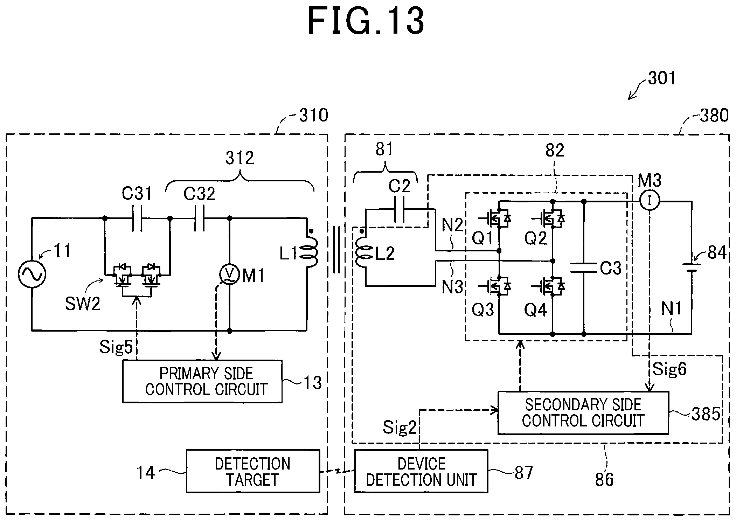

As illustrated in FIG. 13, the wireless power transfer system 301 according to the present embodiment differs from the first embodiment in the circuit configuration of the power transmission device 310 and the circuit configuration of the power reception device 380. The components identical to those in the above-described embodiments are denoted by the same reference numerals, and detailed descriptions thereof are omitted as appropriate.

The power transmission device 310 according to the present embodiment differs from the power transmission device 10 of the first embodiment in its configuration for changing the impedance of the primary side resonance circuit 12. The power transmission device 310 includes a second switch SW2 and capacitors C31 and C32. The capacitor C31 and the capacitor C32 are connected in series. The second switch SW2 is connected between one terminal and the other terminal of the capacitor C31. The second switch SW2 short-circuits or opens between one terminal and the other terminal of the capacitor C31. A switching signal Sig5 is input to the second switch SW2 from the control circuit 50.

When a high-level switching signal Sig5 is input to the second switch SW2, the second switch SW2 is turned on. Accordingly, one terminal and the other terminal of the capacitor C31 are short-circuited, and the capacitor C31 becomes non-conductive. Here, the capacitance of the capacitor C32 and the inductance of the primary side coil L1 are set to values such that they resonate at the operating frequency. Accordingly, when the second switch SW2 is turned on, a primary side resonance circuit 312, which is a series resonance circuit, is formed of the capacitor C32 and the primary side coil L1. In contrast, when a low-level switching signal Sig5 is input to the second switch SW2, the second switch SW2 is turned off, and the capacitor C31 becomes conductive. Then, since the resonance frequency of the resonance circuit formed of the capacitors C31 and C32 and the primary side coil L1 deviates from the operating frequency, the primary side coil L1 is placed in a standby state. Moreover, since the combined capacitance of the capacitors C31 and C32 is less than the capacitance of the capacitor C32 alone, when the second switch SW2 is in the off state, the impedance of the resonance circuit formed of the capacitors C31 and C32 and the primary side coil L1 with respect to the input AC power increases, thereby suppressing the current flowing through the primary side coil L1.

The power reception device 380 according to the present embodiment includes a current sensor M3, which detects a value of current flowing through a wire connected to the positive terminal of the battery 84, in place of the secondary side voltage sensor M2. The current sensor M3 detects a value of current flowing to the pulse generation circuit 82. The current sensor M3 constitutes a current detection circuit that outputs a signal Sig6 indicating the detected value of current to the reception side control circuit 385.

It should be noted that the current sensor M3 may be provided in any of the following wires: the wire connected to the positive terminal of the battery 84, the wire N1 connected to the negative terminal of the battery 84, or the wires N2 and N3 that connect the secondary side resonance circuit 81 and the pulse generation circuit 82. That is, the current sensor M3 may detect a value of current flowing to the pulse generation circuit 82 or a value of current flowing to the secondary side coil L2.

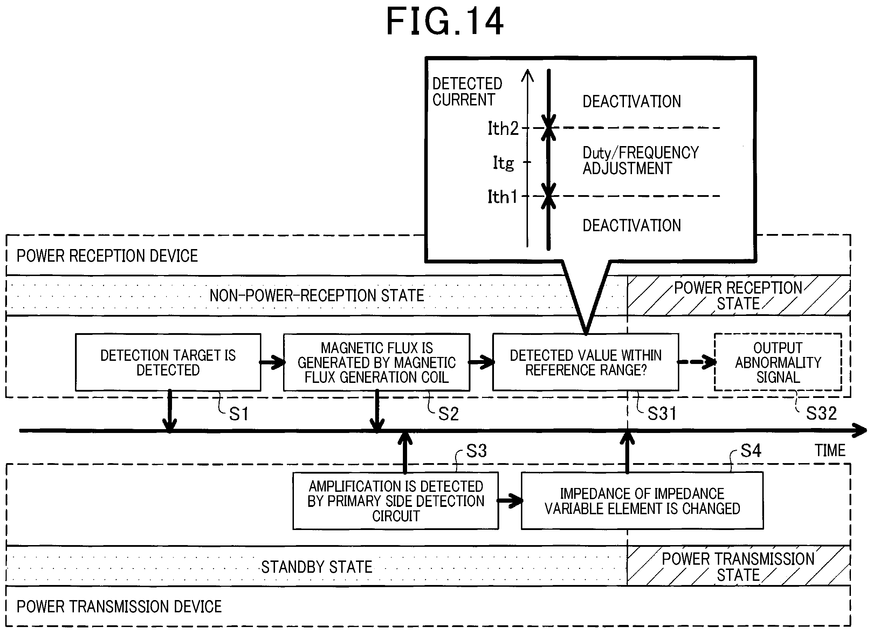

The power transfer initiation sequence of the present embodiment differs from that of the first embodiment in that processing steps following step S2 of the first embodiment are additionally provided. As illustrated in FIG. 14, after the generation of magnetic flux by the secondary side coil L2 serving as a magnetic flux generation coil (step S2), the secondary side control circuit 385 determines, at step S31, whether the detected value of the current sensor M3 is outside a predefined range, using the signal Sig6.

Specifically, the detected value being outside the predefined range means that the detected current, as the detected value of current, is greater than a first threshold Ith1 or less than a second threshold Ith2. When the detected current is greater than the first threshold It1, a fault such as a break in the wire connected to the secondary side resonance circuit 81 is assumed. When the detected current is less than the second threshold Ith2, a situation may be assumed, for example, that due to a malfunction of the power transmission device 310, magnetic coupling between the primary side coil L1 and the secondary side coil L2 is not established. Accordingly, when the detected current is greater than the first threshold Ith1 or less than the second threshold Ith2, the secondary side control circuit 385 ceases the power-supply drive mode and, at step S32, outputs an abnormality signal indicating occurrence of an abnormality to the reception side control unit 96 (see FIG. 1). Upon receiving the abnormality signal, the reception side control unit 96 may cause a message indicating occurrence of the abnormality to be displayed on a display device (not shown) mounted to the vehicle VE. As a result, an occupant of the vehicle VE can be informed that an abnormality has occurred in the charging process. Further, in a configuration where the reception side control unit 96 includes a communication interface capable of communicating with the power transmission device 310, the reception side control unit 96 may transmit a notification of the abnormality to the power transmission device 310.

Further, when the detected current is equal to or greater than the first threshold Ith1 and equal to or less than the second threshold Ith2 but is not equal to the target current value Itg, it is assumed that resonance deviation has occurred. The term "resonance deviation" refers to a state in which the resonance frequency of the secondary side resonance circuit 81 deviates from the operating frequency due to at least one of the value of capacitance value and the value of inductance of the secondary side resonance circuit 81 deviating from its respective target value. Accordingly, as in the first embodiment, the secondary side control circuit 385 appropriately adjusts the magnetic flux generated by the secondary side coil L2 by adjusting at least one of the drive frequency and the duty ratio of the pulse generation circuit 82. Specifically, the secondary side control circuit 385 performs feedback control such that the detected current value approaches the target current value Itg by comparing the detected current value with the target current value Itg, which is predefined and pre-stored for a given drive frequency.

According to the third embodiment described above, the same effects as those of the foregoing embodiments can be obtained. Further, when the detected value is outside the predefined range, that is, when the detected value is greater than the first threshold Ith1 or less than the second threshold Ith2, the secondary side control circuit 385 outputs the abnormality signal to the reception side control unit 96. As a result, the reception side control unit 96, upon receiving the abnormality signal, can perform processing to handle the abnormality.

### D. Fourth Embodiment:

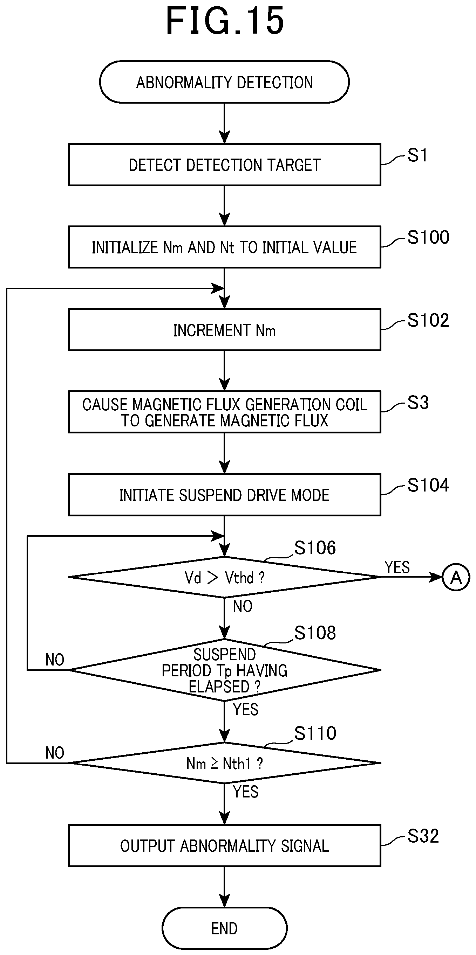

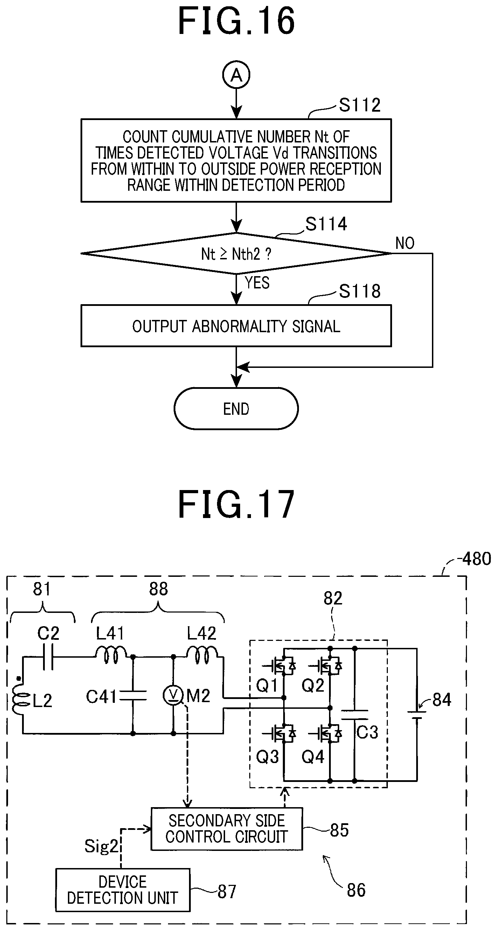

The secondary side control circuit 85 according to the present embodiment differs from that of the first embodiment in that it performs an abnormality detection process as illustrated in FIGS. 15 and 16. The same reference numerals are assigned to the same components and process steps as those in the above embodiments, and detailed descriptions thereof are omitted as appropriate. The secondary side control circuit 85 repeatedly performs the abnormality detection process while the power reception device 80 is in the non-power-reception state. The secondary side voltage sensor M2 detects a value of voltage supplied to the pulse generation circuit 82 in the non-power-reception state, and detects a value of voltage output from the pulse generation circuit 82 in the power reception state.

The secondary side control circuit 85 detects the detection target 14 at step S1. At step S100, the secondary side control circuit 85 initializes to zero the number of cycles Nm and the cumulative number Nt of times, which are variables used in the present processing routine. The number of cycles Nm is a variable used to count the number of second cycles T2 illustrated in FIG. 5, where each second cycle refers to a cycle of the burst driving that includes both the power-supply drive mode and the suspend drive mode. The cumulative number Nt of times is a variable used to detect the occurrence of chattering. It should be noted that, in the present embodiment, step S2 performed in the first embodiment is omitted.

The secondary side control circuit 85 increments the number of cycles Nm at step S102. At step S3, the secondary side control circuit 85 causes the secondary side coil L2, serving as a magnetic flux generating coil, to generate magnetic flux during the drive period Td. At step S104, the secondary side control circuit 85 initiates the suspend drive mode of the pulse generation circuit 82. The secondary side control circuit 85 measures the elapsed time from the start of the suspend drive mode using an internal timer circuit. When the power transmission device 10 transitions to the power transmission state during the suspend period Tp, the power reception device 80 transitions to the power reception state as a result of the switching process performed by the secondary side control circuit 85, as illustrated in FIG. 4. In the power reception state, the secondary side control circuit 85 performs the rectification drive mode so that the pulse generation circuit 82 functions as a rectifier. Accordingly, when no abnormality has occurred, the detection voltage Vd of the secondary side voltage sensor M2 becomes the target voltage.

The secondary side control circuit 85 determines, at step S106, whether the detected voltage Vd from the secondary side voltage sensor M2 is higher than a predefined reference voltage Vthd. In the present embodiment, it is determined at step S106 whether power transfer by the power transmission device 10 has been initiated. The reference voltage Vthd is set to be lower than a target output voltage of the pulse generation circuit 82 when the power reception device 80 is in the power reception state. Accordingly, when the detected voltage Vd is higher than the reference voltage Vthd, it can be determined that the power reception device 80 has transitioned from the non-power-reception state to the power reception state.

In an alternative embodiment for determining whether power transfer by the power transmission device 10 has been initiated, the secondary side control circuit 85 may determine based on whether the drive mode of the pulse generation circuit 82 has been switched from the suspend drive mode to the rectification drive mode, that is, based on whether the switching process has been performed. In this case, when the switching process has been performed, the secondary side control circuit 85 determines that power transfer by the power transmission device 10 has been initiated.

At step S106, when it is determined that the detected voltage Vd is not higher than the reference voltage Vth, that is, the detected voltage Vd is equal to or lower than the reference voltage Vth, the secondary side control circuit 85, at step S108, refers to the measured time of the timing circuit and determines whether the suspend period Tp has elapsed. If it is determined at step S108 that the suspend period Tp has not yet elapsed, the secondary side control circuit 85 returns the process flow to step S106 after a predefined time has elapsed, since power transfer from the power transmission device 10 has not yet been initiated. The predefined time is, for example, several microseconds.

When it is determined at step S108 that the suspend period Tp has elapsed, the secondary side control circuit 85 determines, at step S110 as a first determination process, whether the number of cycles Nm is equal to or greater than a predefined reference number of cycles Nth1. It should be noted that the determination that the suspend period Tp has elapsed at step S108 corresponds to a case where power transfer from the power transmission device 10 has not initiated during the suspend period Tp. The reference number of cycles Nth1 is an integer equal to or greater than two, and is two in the present embodiment. If it is determined at step S110 that the number of cycles Nm is not equal to or greater than the reference number of cycles Nth1, that is, the number of cycles Nm is less than the reference number of cycles Nth1, the secondary side control circuit 85 returns the process flow to step S102 after a predefined time has elapsed. The predefined time is, for example, several microseconds. The process flow is returned to step S102 in order to perform the power-supply drive mode and the suspend drive mode for the next cycle.

When it is determined at step S110 that the number of cycles Nm is equal to or greater than the reference number of cycles Nth1, it is determined that the power transmission device 10 has failed, and thus the secondary side control circuit 85 proceeds to step S32. Step S32 is performed because, despite generating magnetic flux in the secondary side coil L2 at step S3, the number of cycles Nm during which the power transmission device 10 did not transition to the power transmission state has reached or exceeded the reference number of cycles Nth1. At step S32, the secondary side control circuit 85 performs an output process to output an abnormality signal indicating occurrence of an abnormality to the reception side control unit 96. As a result, an occupant in the vehicle VE can be notified that an abnormality has occurred in the charging process. After performing step S32, the secondary side control circuit 85 terminates the current processing routine.

In an alternative embodiment, the secondary side control circuit 85 may perform a deactivation process for placing the pulse generation circuit 82 in the deactivated state instead of performing the process at step S32. In a still alternative embodiment, the secondary side control circuit 85 may perform both the output process and the deactivation process. Here, the deactivated state of pulse generation circuit 82 is a state in which an off signal has been input to each of the switching elements Q1 to Q4 of the pulse generation circuit 82. The deactivation process refers to a process in which the secondary side control circuit 85 outputs an off signal to each of the switching elements Q1 to Q4. The secondary control circuit 85 performs the deactivation process, which may suppress the power consumption of the battery 84. The same applies to step S118, which will be described later.

If it is determined at step S106 that the detected voltage Vd is higher than the reference voltage Vth, the secondary side control circuit 85, at step S112 of FIG. 16, during a predefined detection period, counts the cumulative number Nt of times the detected voltage Vd changes from within a power reception range to outside the power reception range. The detection period is, for example, several hundred microseconds. The detected voltage Vd being within the power reception range means that the detected voltage Vd is higher than the reference voltage Vthd. The detected voltage Vd being outside the power reception range means that the detected voltage Vd is equal to or lower than the reference voltage Vthd.

The secondary side control circuit 85, at step S114 as a second determination process, determines whether the cumulative number Nt of times is equal to or greater than a reference cumulative number Nth2 of times. The reference cumulative number Nth2 of times is an integer equal to or greater than one, and is set to one in the present embodiment. If it is determined at step S114 that the cumulative number Nt of times is equal to or greater than the reference cumulative number Nth2 of times, it is determined that chattering has occurred due to a failure or the like in the power transmission device 10, and the secondary side control circuit 85, at step S118, similarly to step S32, performs an output process of outputting an abnormality signal indicating occurrence of an abnormality to the reception side control unit 96 and terminates this processing routine. On the other hand, if it is determined at step S114 that the cumulative number Nt of times is less than the reference cumulative number Nth2 of times, step S118 is skipped, and this processing routine is terminated.

According to the fourth embodiment described above, when it is determined at step S110 that the number of cycles Nm is equal to or greater than the reference number of cycles Nth1, the secondary side control circuit 85 performs the output process at step S32 to output the abnormality signal. In a case where the power transmission device 10 is malfunctioning, this allows an occupant of the vehicle VE to be informed that an abnormality has occurred. Further, when it is determined at step S114 that the cumulative number Nt of times is equal to or greater than the reference cumulative number of times, the output process is performed at step S118. In a case where power reception by the power reception device 80 is not properly performed due to chattering, this allows an occupant of the vehicle VE to be informed that there is an abnormality in power transfer.

### E. Other Embodiments:

### (E1) Fifth Embodiment:

A power reception device 480 according to a fifth embodiment illustrated in FIG. 17 includes, in addition to the circuit configuration of the first embodiment, an impedance filter 88. The impedance filter 88 is a T-LCL type impedance filter formed of a pair of coils L41 and L42 and a capacitor C41. In this case, the secondary side voltage sensor M2 may be installed at a position where it is capable of detecting the voltage of the capacitor C41.

### (E2) Sixth Embodiment:

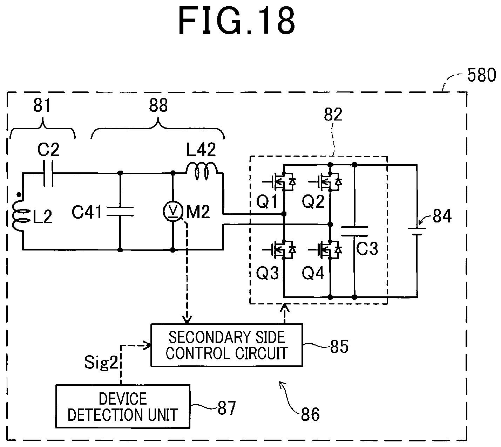

In a power reception device 580 according to a sixth embodiment illustrated in FIG. 18, the coil L41 of the impedance filter 88 of the fifth embodiment is omitted. Even with the coil L41 omitted, the leakage inductance of the secondary side coil L2 can be substituted for the coil L41 to constitute the impedance filter 88.

### (E3) Seventh Embodiment:

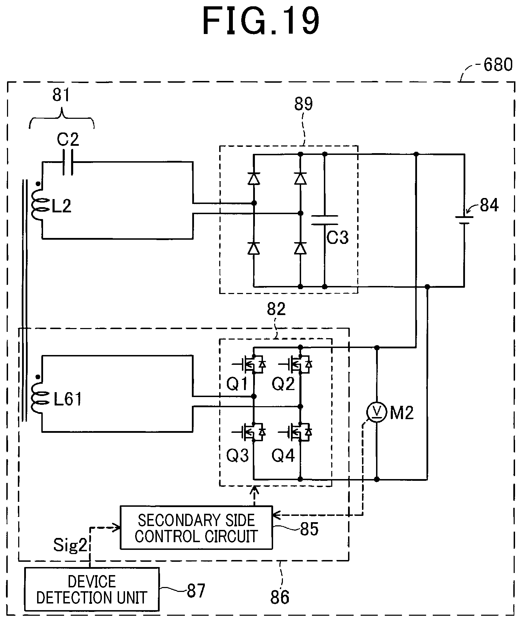

In a power reception device 680 according to a seventh embodiment illustrated in FIG. 19, the power reception device 680 differs from that of the first embodiment in that it includes a magnetic flux generation coil L61 separate from the secondary side coil L2, and a rectification circuit 89 separate from the pulse generation circuit 82. The rectification circuit 89 is implemented as a diode bridge. The magnetic flux generation coil L61 is installed, together with the secondary side coil L2, at a position where magnetic coupling with the primary side coil L1 is possible. The pulse generation circuit 82 is supplied with DC power from the battery 84. Even in a configuration in which the pulse generation circuit 82 is provided separately from the rectification circuit 89, the magnetic flux generated in the primary side coil L1 can be appropriately controlled by adjusting the drive frequency and duty ratio of the pulse generation circuit 82.

(E4) In the above-described first embodiment, the power supplied to the secondary side coil L2, which serves as the magnetic flux generation coil, is adjusted by adjusting the drive frequency and duty ratio of the pulse generation circuit 82. In another embodiment, a DC-DC converter may be provided between the pulse generation circuit 82 and the battery 84, and the power supplied to the magnetic flux generation coil may be adjusted by changing the voltage supplied to the pulse generation circuit 82 using the DC-DC converter.

(E5) In the above third embodiment, the pulse generation circuit 82 is driven so as to eliminate the deviation from the target current value Itg of the current flowing to the secondary side coil L2 due to resonance deviation, using the detected value of the current sensor M3. In this case, instead of the current sensor M3, a voltage sensor configured to detect the voltage of the secondary side coil L2 or a voltage sensor configured to detect the voltage of the secondary side capacitor C2 may be provided. Then, the reception side control unit 385 may adjust the drive frequency and duty ratio of the pulse generation circuit 82 using the detected value of the voltage sensor instead of the detected value of the current sensor M3.

(E6) In the above first embodiment, the primary side capacitor C1 is connected in series with the primary side coil L1 in the primary side resonance circuit 12, and the secondary side capacitor C2 is connected in series with the secondary side coil L2 in the secondary side resonance circuit 81. This is a so-called S-S type circuit configuration. The circuit configuration of the primary side resonance circuit 12 and the circuit configuration of the secondary side resonance circuit 81 are not limited to the S-S type. (a) For example, in a so-called P-S type circuit configuration, the primary side capacitor C1 is connected in parallel to the primary side coil L1 in the primary side resonance circuit 12, and the secondary side capacitor C2 is connected in series with the secondary side coil L2 in the secondary side resonance circuit 81. (b) Alternatively, in a so-called P-SS type circuit configuration, in addition to the primary side capacitor C1 connected in series with the primary side coil L1, a capacitor is connected in parallel to the primary side coil L1, and in the secondary side resonance circuit 81, two secondary side capacitors C2 are connected in series with the respective terminals of the secondary side coil L2. (c) The primary side resonance circuit 12 may further include a closed circuit in which a coil and a capacitor are connected in series. The coil in the closed circuit is disposed at a position where magnetic coupling with the secondary side coil L2 is possible when magnetic coupling occurs between the primary side coil L1 and the secondary side coil L2. (d) Furthermore, the capacitor of the closed circuit may be connected in parallel, rather than in series, with the coil. (e) Moreover, the primary side resonance circuit 12 may include a coil connected in series with the primary side coil L1, and a capacitor connected in parallel with the coil. This coil is disposed at a position where magnetic coupling with the secondary side coil L2 is possible when magnetic coupling occurs between the primary side coil L1 and the secondary side coil L2.

(E7) In the above first embodiment, the switching elements Q1 to Q4 constituting the pulse generation circuit 82 are implemented using MOSFETs. In another embodiment, the switching elements Q1 to Q4 may be implemented using other semiconductor elements, such as Insulated Gate Bipolar Transistors (IGBTs) with freewheeling diodes connected thereto.

(E8) In the above first embodiment, the reception side control unit 96 outputs the power transfer enable signal or the power transfer inhibition signal. The secondary side control circuit 85 does not drive the pulse generation circuit 82 when the power transfer inhibition signal is received. In an alternative embodiment, the reception side control unit 96 may be configured to output neither the power transfer enable signal nor the power transfer inhibition signal. In this case, the secondary side control circuit 85 may be configured not to drive the pulse generation circuit 82 when a power transfer inhibition signal is received and no power transfer enable signal has been received. This makes it possible to avoid power transfer when the battery 84 is not suitable for charging.

(E9) In the above first embodiment, no current flows through the secondary side coil L2 of the power reception device 80 in the non-power-reception state. In another embodiment, in the non-power-reception state, a current may be supplied to the secondary side coil L2 of the power reception device 80, and, at step S3, the reception side control unit 85 may increase the current supplied to the secondary side coil L2 so as to increase the magnetic flux radiated to link with the primary side coil L1.

The present disclosure is not limited to any of the embodiments described above but may be implemented by a diversity of other configurations without departing from the scope of the disclosure. For example, the technical features of the embodiments corresponding to the technical features of the respective aspects may be replaced or combined appropriately, in order to solve some or all of the issues described above or in order to achieve some or all of the advantages described above. Any of the technical features may be omitted appropriately unless the technical feature is described as essential herein.

While the disclosure has been described in accordance with the embodiments, it is understood that the disclosure is not limited to such embodiments or structures. The disclosure also encompasses various modifications and variations within the scope of equality. Furthermore, various combinations and modes, as well as other combinations and modes including only one element, more or less, thereof, are also within the scope and idea of the disclosure.

### Other Aspects:

The features of this disclosure are presented as follows.

(Clause 1) A wireless power transfer system (1, 201, 301) for wirelessly transferring power from a power transmission device (10, 210, 310) to a power reception device (80, 280, 380), wherein
the power transmission device comprises:
   a primary side resonance circuit (12) including a primary side coil (L1) and a primary side capacitor (C1);
   an AC power source (11) configured to apply AC power of a predefined operating frequency to the primary side resonance circuit; and
   a primary side detection circuit (120) configured to detect a magnitude of magnetic flux linking with the primary side coil or a magnitude of magnetic flux in a vicinity of the primary side coil,
the power reception device comprises:
   a secondary side resonance circuit (81) including a secondary side coil (L2) magnetically coupled to the primary side coil and a secondary side capacitor (C2);
   a magnetic flux generation circuit (86, 286, 386) including a magnetic flux generation coil (L2) configured to generate magnetic flux radiated toward the primary side coil in a standby state of the power transmission device, a pulse generation circuit (82) configured to supply AC power to the magnetic flux generation coil, and a secondary side control unit (85, 285, 385) configured to control the pulse generation circuit; and
      a secondary side detection circuit (M2, 281, M3) configured to detect at least one of a value of voltage supplied to the pulse generation circuit, a value of current flowing through the secondary side coil or the pulse generation circuit, and a magnitude of magnetic flux generated by the primary side coil, wherein
   the power transmission device transitions from the standby state to a power transmission state in which a power transmission current is supplied to the primary side coil when the primary side detection circuit detects an increase in the magnetic flux linking with the primary side coil or an increase in the magnetic flux in the vicinity of the primary side coil; and
   the magnetic flux generation circuit adjusts the generated magnetic flux based on a detected value of the secondary side detection circuit.

(Clause 2) The wireless power transfer system according to clause 1, wherein
the power reception device further comprises a battery (84) configured to supply DC power to the pulse generation circuit, and
the secondary side detection circuit is a voltage detection circuit configured to detect a value of voltage output from the battery as the value of voltage supplied to the pulse generation circuit.

(Clause 3) The wireless power transfer system according to clause 2, wherein
the pulse generation circuit is configured as an inverter, and
the reception side control unit is configured to adjust magnetic flux to be generated by adjusting at least one of a drive frequency and a duty ratio of the pulse generation circuit.

(Clause 4) The wireless power transfer system according to clause 2 or 3, wherein
the reception side control unit is configured to cease supply of AC power by the pulse generation circuit when the detected value is outside a predefined range.

(Clause 5) The wireless power transfer system according to any one of clauses 2 to3, wherein
the secondary side control circuit is configured to periodically alternate between a power-supply drive mode, in which AC power is supplied from the pulse generation circuit to the magnetic flux generation coil, and a suspend drive mode, in which supply of AC power from the pulse generation circuit to the magnetic flux generation coil is suspended, in a non-power-reception state, and
the power transmission device is configured to transition to the power transmission state after a predefined standby period has elapsed during the suspend drive mode, upon detection, by the primary side detection circuit, of an increase in magnetic flux linking with the primary side coil or an increase in magnetic flux in the vicinity of the primary side coil.

(Clause 6) The wireless power transfer system according to any one of clauses 1 to 5, wherein
the secondary side detection circuit is a magnetic flux detection circuit configured to detect a magnitude of magnetic flux generated by the primary side coil.

(Clause 7) The wireless power transfer system according to clause 6, wherein
the pulse generation circuit is configured as an inverter, and
the reception side control unit is configured to adjust magnetic flux to be generated by adjusting at least one of a drive frequency and a duty ratio of the pulse generation circuit.

(Clause 8) The wireless power transfer system according to clause 6 or 7, wherein
the reception side control unit is configured to cease supply of AC current by the pulse generation circuit when the detected value is outside a predefined range.

(Clause 9) The wireless power transfer system according to any one of clauses 6 to 8, wherein
the reception side control unit is configured to:
periodically alternate between a power-supply drive mode, in which AC power is supplied from the pulse generation circuit to the magnetic flux generation coil, and a suspend drive mode, in which supply of AC power from the pulse generation circuit to the magnetic flux generation coil is suspended; and
continue the suspend drive mode for a predefined time or longer when, after the power-supply drive mode is performed, the detected value is within a predefined magnetic flux range.

(Clause 10) The wireless power transfer system according to any one of clauses 6 to 9, wherein
the reception side control unit is configured to perform control to maximize power transfer efficiency based on a coupling coefficient calculated using the detected value.

(Clause 11) The wireless power transfer system according to any one of clauses 1 to 10, wherein
the secondary side detection circuit is a current detection circuit configured to detect a value of current flowing through the secondary side coil or the pulse generation circuit.

(Clause 12) The wireless power transfer system according to clause 11, wherein
the pulse generation circuit is configured as an inverter, and
the reception side control circuit is configured to adjust magnetic flux to be generated by adjusting at least one of a drive frequency and a duty ratio of the pulse generation circuit, based on the detected value acquired when the pulse generation circuit is driven under a predefined condition.

(Clause 13) The wireless power transfer system according to clause 11 or 12, wherein
the reception side control circuit is configured to output an abnormality signal when the detected value is outside a predefined range.

(Clause 14) The wireless power transfer system according to any one of clauses 1 to 13, wherein
the reception side control circuit is configured to place the pulse generation circuit in a deactivated state when a power transfer inhibition signal is received, or when neither the power transfer inhibition signal nor a power transfer enable signal is received.

(Clause 15) The wireless power transfer system according to clause 14, wherein
the reception side control circuit is configured to initiate driving the pulse generation circuit when the power transfer enable signal is received after reception of the power transfer inhibition signal.

(Clause 16) The wireless power transfer system according to clause 5, wherein
the power reception device is mounted to a mobile object (VE), and
the reception side control circuit is configured to adjust a duration of the suspend drive mode based on a movement speed of the mobile object, the movement speed being acquired by a speed acquisition unit (97).

(Clause 17) The wireless power transfer system according to clause 1, wherein
the power reception device further comprises a battery (84) configured to supply DC power to the pulse generation circuit,
the pulse generation circuit functions, in a non-power-reception state, as an inverter that converts DC power supplied from the battery into AC power, and functions, in a power reception state, as a rectifier that converts AC power output from the secondary side resonance circuit into DC power,
the reception side control circuit repeatedly performs, in the non-power-reception state, a power-supply drive mode for a predefined drive period in which the pulse generation circuit supplies AC power to the magnetic flux generation coil, and a suspend drive mode for a predefined suspend period following the power-supply drive mode, during which supply of AC power from the pulse generation circuit to the magnetic flux generation coil is suspended,
the reception side control circuit performs:
   a switching process of switching from the suspend drive mode to a rectification drive mode in which the pulse generation circuit functions as the rectifier, when power transfer from the power transmission device is initiated during the suspend period; and
   a first determination process of determining, when the suspend period has expired without power transfer having been initiated by the power transmission device during the suspend period, whether a number of cycles of the power-supply drive mode and the suspend drive mode is equal to or greater than a predefined reference number of cycles; and
   in response to determining in the first determination process that the number of cycles is equal to or greater than the reference number of cycles, performs at least one of an output process of outputting an abnormality signal and a deactivation process of placing the pulse generation circuit to a deactivated state.

(Clause 18) The wireless power transfer system according to clause 1, wherein
the power reception device further comprises a battery (84) configured to supply DC power to the pulse generation circuit,
the secondary side detection circuit configured to detect a value of voltage supplied to the pulse generation circuit is configured to detect both the value of voltage supplied to the pulse generation circuit and a value of voltage output from the pulse generation circuit,
the pulse generation circuit functions, in a non-power-reception state, as an inverter that converts DC power supplied from the battery into AC power, and functions, in a power reception state, as a rectifier that converts AC power output from the secondary side resonance circuit into DC power,
the reception side control circuit repeatedly performs, in the non-power-reception state, a power-supply drive mode for a predefined drive period in which the pulse generation circuit supplies AC power to the magnetic flux generation coil, and a suspend drive mode for a predefined suspend period following the power-supply drive mode, during which supply of AC power from the pulse generation circuit to the magnetic flux generation coil is suspended,
the reception side control circuit performs:
   a switching process of switching from the suspend drive mode to a rectification drive mode in which the pulse generation circuit functions as the rectifier, when power transfer from the power transmission device is initiated during the suspend period; and
   a second determination process of determining, during the rectification drive mode, whether a cumulative number of times that the detected value has changed from within a predefined power reception range to outside the power reception range during a predefined detection period is equal to or greater than a predefined reference cumulative number of times;
   in response to determining in the second determination process that the cumulative number of times is equal to or greater than the reference cumulative number of times, performs at least one of an output process of outputting an abnormality signal and a deactivation process of placing the pulse generation circuit to a deactivated state.

(Clause 19) The wireless power transfer system according to clause 1, wherein
the secondary side coil is used as the magnetic flux generation coil,
the power reception device further comprises a battery (84) configured to supply DC power to the pulse generation circuit,
the pulse generation circuit is a synchronous rectification circuit and functions, in a non-power-reception state, as an inverter that converts DC power supplied from the battery into AC power, and functions, in a power reception state, as a rectifier that converts AC power output from the secondary side resonance circuit into DC power, and
the battery supplies DC power to the pulse generation circuit in the non-power-reception state and stores DC power output from the secondary side resonance circuit in the power reception state.

(Clause 20) A power reception device (80, 280, 380) for receiving power wirelessly from a power transmission device (10, 210, 310), wherein
the power transmission device comprises:
   a primary side resonance circuit (12) including a primary side coil (L1) and a primary side capacitor (C1);
   an AC power source (11) configured to apply AC power of a predefined operating frequency to the primary side resonance circuit; and
   a primary side detection circuit (120) configured to detect a magnitude of magnetic flux linking with the primary side coil or a magnitude of magnetic flux in a vicinity of the primary side coil,
the power reception device comprises:
   a secondary side resonance circuit (81) including a secondary side coil (L2) magnetically coupled to the primary side coil and a secondary side capacitor (C2);
   a magnetic flux generation circuit (86, 286, 386) including a magnetic flux generation coil (L2) configured to generate magnetic flux radiated toward the primary side coil in a standby state of the power transmission device, a pulse generation circuit (82) configured to supply AC power to the magnetic flux generation coil, and a secondary side control unit (85, 285, 385) configured to control the pulse generation circuit; and
   a secondary side detection circuit (M2, 281, M3) configured to detect at least one of a value of voltage supplied to the pulse generation circuit, a value of current flowing through the secondary side coil or the pulse generation circuit, and a magnitude of magnetic flux generated by the primary side coil; wherein
the power transmission device transitions from the standby state to a power transmission state in which a power transmission current is supplied to the primary side coil when the primary side detection circuit detects an increase in the magnetic flux linking with the primary side coil or an increase in the magnetic flux in the vicinity of the primary side coil; and
the magnetic flux generation circuit adjusts the generated magnetic flux based on a detected value of the secondary side detection circuit.

(Clause 21) A power transmission device (10, 210, 310) for wirelessly transferring power to a power reception device (80, 280, 380), wherein
the power transmission device comprises:
   a primary side resonance circuit (12) including a primary side coil (L1) and a primary side capacitor (C1);
   an AC power source (11) configured to apply AC power of a predefined operating frequency to the primary side resonance circuit; and
   a primary side detection circuit (120) configured to detect a magnitude of magnetic flux linking with the primary side coil or a magnitude of magnetic flux in a vicinity of the primary side coil,
the power reception device comprises:
   a secondary side resonance circuit (81) including a secondary side coil (L2) magnetically coupled to the primary side coil and a secondary side capacitor (C2);
   a magnetic flux generation circuit (86, 286, 386) including a magnetic flux generation coil (L2) configured to generate magnetic flux radiated toward the primary side coil in a standby state of the power transmission device, a pulse generation circuit (82) configured to supply AC power to the magnetic flux generation coil, and a secondary side control unit (85, 285, 385) configured to control the pulse generation circuit; and
   a secondary side detection circuit (M2, 281, M3) configured to detect at least one of a value of voltage supplied to the pulse generation circuit, a value of current flowing through the secondary side coil or the pulse generation circuit, and a magnitude of magnetic flux generated by the primary side coil; wherein
the magnetic flux generation circuit adjusts the generated magnetic flux based on a detected value of the secondary side detection circuit, and
the power transmission device transitions from the standby state to a power transmission state in which a power transmission current is supplied to the primary side coil when the primary side detection circuit detects an increase in the magnetic flux linking with the primary side coil or an increase in the magnetic flux in the vicinity of the primary side coil.

## Claims

1. A wireless power transfer system (1, 201, 301) for wirelessly transferring power from a power transmission device (10, 210, 310) to a power reception device (80, 280, 380), wherein
the power transmission device comprises:
a primary side resonance circuit (12) including a primary side coil (L1) and a primary side capacitor (C1);
an AC power source (11) configured to apply AC power of a predefined operating frequency to the primary side resonance circuit; and
a primary side detection circuit (120) configured to detect a magnitude of magnetic flux linking with the primary side coil or a magnitude of magnetic flux in a vicinity of the primary side coil,
the power reception device comprises:
a secondary side resonance circuit (81) including a secondary side coil (L2) magnetically coupled to the primary side coil and a secondary side capacitor (C2);
a magnetic flux generation circuit (86, 286, 386) including a magnetic flux generation coil (L2) configured to generate magnetic flux radiated toward the primary side coil in a standby state of the power transmission device, a pulse generation circuit (82) configured to supply AC power to the magnetic flux generation coil, and a secondary side control unit (85, 285, 385) configured to control the pulse generation circuit; and
a secondary side detection circuit (M2, 281, M3) configured to detect at least one of a value of voltage supplied to the pulse generation circuit, a value of current flowing through the secondary side coil or the pulse generation circuit, and a magnitude of magnetic flux generated by the primary side coil, wherein
the power transmission device transitions from the standby state to a power transmission state in which a power transmission current is supplied to the primary side coil when the primary side detection circuit detects an increase in the magnetic flux linking with the primary side coil or an increase in the magnetic flux in the vicinity of the primary side coil; and
the magnetic flux generation circuit adjusts the generated magnetic flux based on a detected value of the secondary side detection circuit.

2. The wireless power transfer system according to claim 1, wherein
the power reception device further comprises a battery (84) configured to supply DC power to the pulse generation circuit, and
the secondary side detection circuit is a voltage detection circuit configured to detect a value of voltage output from the battery as the value of voltage supplied to the pulse generation circuit.

3. The wireless power transfer system according to claim 2, wherein
the pulse generation circuit is configured as an inverter, and
the reception side control unit is configured to adjust magnetic flux to be generated by adjusting at least one of a drive frequency and a duty ratio of the pulse generation circuit.

4. The wireless power transfer system according to claim 2 or 3, wherein
the reception side control unit is configured to cease supply of AC power by the pulse generation circuit when the detected value is outside a predefined range.

5. The wireless power transfer system according to claim 3, wherein
the secondary side control circuit is configured to periodically alternate between a power-supply drive mode, in which AC power is supplied from the pulse generation circuit to the magnetic flux generation coil, and a suspend drive mode, in which supply of AC power from the pulse generation circuit to the magnetic flux generation coil is suspended, in a non-power-reception state, and
the power transmission device is configured to transition to the power transmission state after a predefined standby period has elapsed during the suspend drive mode, upon detection, by the primary side detection circuit, of an increase in magnetic flux linking with the primary side coil or an increase in magnetic flux in the vicinity of the primary side coil.

6. The wireless power transfer system according to claim 1, wherein
the secondary side detection circuit is a magnetic flux detection circuit configured to detect a magnitude of magnetic flux generated by the primary side coil.

7. The wireless power transfer system according to claim 6, wherein
the pulse generation circuit is configured as an inverter, and
the reception side control unit is configured to adjust magnetic flux to be generated by adjusting at least one of a drive frequency and a duty ratio of the pulse generation circuit.

8. The wireless power transfer system according to claim 6 or 7, wherein
the reception side control unit is configured to cease supply of AC current by the pulse generation circuit when the detected value is outside a predefined range.

9. The wireless power transfer system according to claim 7, wherein
the reception side control unit is configured to:
periodically alternate between a power-supply drive mode, in which AC power is supplied from the pulse generation circuit to the magnetic flux generation coil, and a suspend drive mode, in which supply of AC power from the pulse generation circuit to the magnetic flux generation coil is suspended; and
continue the suspend drive mode for a predefined time or longer when, after the power-supply drive mode is performed, the detected value is within a predefined magnetic flux range.

10. The wireless power transfer system according to claim 6, wherein
the reception side control unit is configured to perform control to maximize power transfer efficiency based on a coupling coefficient calculated using the detected value.

11. The wireless power transfer system according to claim 1, wherein
the secondary side detection circuit is a current detection circuit configured to detect a value of current flowing through the secondary side coil or the pulse generation circuit.

12. The wireless power transfer system according to claim 11, wherein
the pulse generation circuit is configured as an inverter, and
the reception side control circuit is configured to adjust magnetic flux to be generated by adjusting at least one of a drive frequency and a duty ratio of the pulse generation circuit, based on the detected value acquired when the pulse generation circuit is driven under a predefined condition.

13. The wireless power transfer system according to claim 11 or 12, wherein
the reception side control circuit is configured to output an abnormality signal when the detected value is outside a predefined range.

14. The wireless power transfer system according to claim 1, wherein
the reception side control circuit is configured to place the pulse generation circuit in a deactivated state when a power transfer inhibition signal is received, or when neither the power transfer inhibition signal nor a power transfer enable signal is received.

15. The wireless power transfer system according to claim 14, wherein
the reception side control circuit is configured to initiate driving the pulse generation circuit when the power transfer enable signal is received after reception of the power transfer inhibition signal.

16. The wireless power transfer system according to claim 5, wherein
the power reception device is mounted to a mobile object (VE), and
the reception side control circuit is configured to adjust a duration of the suspend drive mode based on a movement speed of the mobile object, the movement speed being acquired by a speed acquisition unit (97).

17. The wireless power transfer system according to claim 1, wherein
the power reception device further comprises a battery (84) configured to supply DC power to the pulse generation circuit,
the pulse generation circuit functions, in a non-power-reception state, as an inverter that converts DC power supplied from the battery into AC power, and functions, in a power reception state, as a rectifier that converts AC power output from the secondary side resonance circuit into DC power,
the reception side control circuit repeatedly performs, in the non-power-reception state, a power-supply drive mode for a predefined drive period in which the pulse generation circuit supplies AC power to the magnetic flux generation coil, and a suspend drive mode for a predefined suspend period following the power-supply drive mode, during which supply of AC power from the pulse generation circuit to the magnetic flux generation coil is suspended,
the reception side control circuit performs:
a switching process of switching from the suspend drive mode to a rectification drive mode in which the pulse generation circuit functions as the rectifier, when power transfer from the power transmission device is initiated during the suspend period; and
a first determination process of determining, when the suspend period has expired without power transfer having been initiated by the power transmission device during the suspend period, whether a number of cycles of the power-supply drive mode and the suspend drive mode is equal to or greater than a predefined reference number of cycles; and
in response to determining in the first determination process that the number of cycles is equal to or greater than the reference number of cycles, performs at least one of an output process of outputting an abnormality signal and a deactivation process of placing the pulse generation circuit to a deactivated state.

18. The wireless power transfer system according to claim 1, wherein
the power reception device further comprises a battery (84) configured to supply DC power to the pulse generation circuit,
the secondary side detection circuit configured to detect a value of voltage supplied to the pulse generation circuit is configured to detect both the value of voltage supplied to the pulse generation circuit and a value of voltage output from the pulse generation circuit,
the pulse generation circuit functions, in a non-power-reception state, as an inverter that converts DC power supplied from the battery into AC power, and functions, in a power reception state, as a rectifier that converts AC power output from the secondary side resonance circuit into DC power,
the reception side control circuit repeatedly performs, in the non-power-reception state, a power-supply drive mode for a predefined drive period in which the pulse generation circuit supplies AC power to the magnetic flux generation coil, and a suspend drive mode for a predefined suspend period following the power-supply drive mode, during which supply of AC power from the pulse generation circuit to the magnetic flux generation coil is suspended,
the reception side control circuit performs:
a switching process of switching from the suspend drive mode to a rectification drive mode in which the pulse generation circuit functions as the rectifier, when power transfer from the power transmission device is initiated during the suspend period; and
a second determination process of determining, during the rectification drive mode, whether a cumulative number of times that the detected value has changed from within a predefined power reception range to outside the power reception range during a predefined detection period is equal to or greater than a predefined reference cumulative number of times;
in response to determining in the second determination process that the cumulative number of times is equal to or greater than the reference cumulative number of times, performs at least one of an output process of outputting an abnormality signal and a deactivation process of placing the pulse generation circuit to a deactivated state.

19. The wireless power transfer system according to claim 1, wherein
the secondary side coil is used as the magnetic flux generation coil,
the power reception device further comprises a battery (84) configured to supply DC power to the pulse generation circuit,
the pulse generation circuit is a synchronous rectification circuit and functions, in a non-power-reception state, as an inverter that converts DC power supplied from the battery into AC power, and functions, in a power reception state, as a rectifier that converts AC power output from the secondary side resonance circuit into DC power, and
the battery supplies DC power to the pulse generation circuit in the non-power-reception state and stores DC power output from the secondary side resonance circuit in the power reception state.

20. A power reception device (80, 280, 380) for receiving power wirelessly from a power transmission device (10, 210, 310), wherein
the power transmission device comprises:
a primary side resonance circuit (12) including a primary side coil (L1) and a primary side capacitor (C1);
an AC power source (11) configured to apply AC power of a predefined operating frequency to the primary side resonance circuit; and
a primary side detection circuit (120) configured to detect a magnitude of magnetic flux linking with the primary side coil or a magnitude of magnetic flux in a vicinity of the primary side coil,
the power reception device comprises:
a secondary side resonance circuit (81) including a secondary side coil (L2) magnetically coupled to the primary side coil and a secondary side capacitor (C2);
a magnetic flux generation circuit (86, 286, 386) including a magnetic flux generation coil (L2) configured to generate magnetic flux radiated toward the primary side coil in a standby state of the power transmission device, a pulse generation circuit (82) configured to supply AC power to the magnetic flux generation coil, and a secondary side control unit (85, 285, 385) configured to control the pulse generation circuit; and
a secondary side detection circuit (M2, 281, M3) configured to detect at least one of a value of voltage supplied to the pulse generation circuit, a value of current flowing through the secondary side coil or the pulse generation circuit, and a magnitude of magnetic flux generated by the primary side coil; wherein
the power transmission device transitions from the standby state to a power transmission state in which a power transmission current is supplied to the primary side coil when the primary side detection circuit detects an increase in the magnetic flux linking with the primary side coil or an increase in the magnetic flux in the vicinity of the primary side coil; and
the magnetic flux generation circuit adjusts the generated magnetic flux based on a detected value of the secondary side detection circuit.

21. A power transmission device (10, 210, 310) for wirelessly transferring power to a power reception device (80, 280, 380), wherein
the power transmission device comprises:
a primary side resonance circuit (12) including a primary side coil (L1) and a primary side capacitor (C1);
an AC power source (11) configured to apply AC power of a predefined operating frequency to the primary side resonance circuit; and
a primary side detection circuit (120) configured to detect a magnitude of magnetic flux linking with the primary side coil or a magnitude of magnetic flux in a vicinity of the primary side coil,
the power reception device comprises:
a secondary side resonance circuit (81) including a secondary side coil (L2) magnetically coupled to the primary side coil and a secondary side capacitor (C2);
a magnetic flux generation circuit (86, 286, 386) including a magnetic flux generation coil (L2) configured to generate magnetic flux radiated toward the primary side coil in a standby state of the power transmission device, a pulse generation circuit (82) configured to supply AC power to the magnetic flux generation coil, and a secondary side control unit (85, 285, 385) configured to control the pulse generation circuit; and
a secondary side detection circuit (M2, 281, M3) configured to detect at least one of a value of voltage supplied to the pulse generation circuit, a value of current flowing through the secondary side coil or the pulse generation circuit, and a magnitude of magnetic flux generated by the primary side coil; wherein
the magnetic flux generation circuit adjusts the generated magnetic flux based on a detected value of the secondary side detection circuit, and
the power transmission device transitions from the standby state to a power transmission state in which a power transmission current is supplied to the primary side coil when the primary side detection circuit detects an increase in the magnetic flux linking with the primary side coil or an increase in the magnetic flux in the vicinity of the primary side coil.
